# EUROPÄISCHE PATENTSCHRIFT

(11) **EP 2 390 977 B1**
(45) Veröffentlichungstag und Bekanntmachung des Hinweises auf die Patenterteilung: **26.02.2014**
(21) Anmeldenummer: 10163922.7
(22) Anmeldetag: 26.05.2010
(51) Int. Cl.: H02G 3/14, H01H 3/12, H01H 13/14, H01H 21/24

(54) **Abdeckteil, insbesondere Abdeckrahmen, und elektrische Installationsvorrichtung mit diesem Abdeckteil**
Covering section, in particular covering frame and electric installation device with this covering section
Elément de recouvrement, notamment cadre de recouvrement, et dispositif d'installation électrique doté de cet élément de recouvrement

(43) Veröffentlichungstag der Anmeldung: 30.11.2011
(73) Patentinhaber: GIRA Giersiepen GmbH & Co. KG, 42477 Radevormwald (DE)
(72) Erfinder: Weingärtner, Günther, 51688, Wipperfürth (DE); Weingärtner, Ilka, 51688, Wipperfürth (DE); Lankuttis, Klaus, 51465, Bergisch Gladbach (DE); Riediger, Frank, 42929, Wermelskirchen (DE); Gediger, Frank, 42279, Wuppertal (DE); Strehle, Ronny, 42499, Hückeswagen (DE)
(74) Vertreter: Patentanwälte Dr. Solf & Zapf

(56) Entgegenhaltungen:
- DE-A1- 4 134 044
- DE-A1- 19 538 944
- DE-B- 1 184 393
- DE-U1-202006 006 281

## Beschreibung

Die vorliegende Erfindung betrifft ein Abdeckteil, insbesondere einen Abdeckrahmen,
- für das Sockelteil mindestens einer elektrischen Installationsvorrichtung, insbesondere zur Unterputzmontage, welche einen Tastschalter aufweist, durch den über ein Betätigungselement, das unter einem Betätigungsdruck auf seine Oberseite einen Betätigungsweg aus einer Ruheposition in eine Schaltposition zurücklegt, ein Schaltvorgang ausgelöst wird,
- mit einem Rahmenkörper, der eine Deckfläche aufweist und das Betätigungselement randseitig umgibt, nach dem Oberbegriff des Anspruchs 1.

Des Weiteren betrifft die Erfindung eine elektrische Installationsvorrichtung, insbesondere zur Unterputzmontage, welche in einem Sockelteil einen Tastschalter aufweist, durch den über ein Betätigungselement, das unter einem Betätigungsdruck auf seine Oberseite einen Betätigungsweg aus einer Ruheposition in eine Schaltposition zurücklegt, ein Schaltvorgang ausgelöst wird, und welche ein Abdeckteil mit einem eine Deckfläche aufweisenden Rahmenkörper umfasst, der das Betätigungselement randseitig umgibt, nach dem Oberbegriff des Anspruchs 19.

Ein ähnliches Abdeckteil und eine derartige elektrische Installationsvorrichtung sind aus der DE 20 2008 001 092 U1 bekannt. Der bekannte Abdeckrahmen ist einer elektrischen Installationsvorrichtung zugeordnet, die einen Funktionsaufsatz aufweist, bei dem es sich um ein wie vorstehend beschriebenes Betätigungselement, z. B. eine Tast-Wippe oder einen sogenannten Touch-Aufsatz, handeln kann. Der Funktionsaufsatz wirkt mit einer darunter angeordneten Platine zusammen, auf der sich oberseitig elektrische Schaltkontakte befinden. Die Platine wiederum besitzt elektrische Leitungsverbindungen, die zum Anschluss eines darunter angeordneten, zu schaltenden elektrischen Gerätes dienen. Das elektrische Gerät befindet sich in einem Sockelteil, welches einen Tragring und Krallen zur Befestigung in einer Dose, beispielsweise einer Hohlwanddose, aufweist. Die Platine wird dabei von einem Tragrahmen aufgenommen, der über Klemmfedern form- und kraftschlüssig mit dem Sockelteil und dem Rahmenkörper verbindbar ist. Zur Montage wird zunächst das Sockelteil in der Dose festgekrallt. Danach wird der Abdeckrahmen auf den Tragring des Sockelteils und die Wand aufgesetzt. Der Tragrahmen wird mit eingelegter Platine - als Klemmstück wirkend - mit dem Sockelteil und dem Rahmenkörper verbunden, und zuletzt wird das Betätigungselement aufgesetzt, wobei dieses randseitig von dem Rahmenkörper umgeben wird. Die elektrische Installationsvorrichtung ist dabei insbesondere derart ausgestaltet, dass sie einen sogenannten Tapetenausgleich ermöglicht, und hat sich in der Praxis bewährt.

Die DE 41 34 044 A1 beschreibt sowohl ein Abdeckteil als auch eine elektrische Installationsvorrichtung der eingangs genannten Art. Insbesondere beschreibt dieses Dokument eine Türanlage, insbesondere eine Türsprechanlage, mit einem Gehäuse, einem Aufnahmerahmen, mehreren rechteckigen, vorzugsweise quadratischen Funktionseinheiten und ggf. Abdicht- und Verblendmitteln, wobei der Aufnahmerahmen im oder am Gehäuse vorgesehen und vorzugsweise schwenkbar und feststellbar mit dem Gehäuse verbunden ist und die Funktionseinheiten aufnimmt, und wobei die Funktionseinheiten ein Funktionselement oder mehrere Funktionselemente aufweisen. Dabei sind die Funktionseinheiten mit Hilfe von Verbindungselementen verbunden. Dieses letzte Merkmal wird dabei als unverzichtbar angesehen, weil dadurch erreicht wird, dass die Funktionseinheiten der Türanlage sowohl nebeneinander als auch hintereinander aneinandergereiht und von einem Aufnahmerahmen aufgenommen werden können, wobei der Aufnahmerahmen keine Raststege aufweist, an welchen jede einzelne Funktionseinheit für sich befestigt ist.

Die DE 11 84 393 B beschreibt einen Klappdeckel für Gehäuse elektrischer Geräte, insbesondere für Schalter und für Steckdosen, mit einer von außen nicht sichtbaren, in einem Gelenkteil des Klappdeckels und in dem durch letzteren verschließbaren Gehäuse in einem Aufnahmeraum desselben gelagerten Gelenkachse mit Lagerstellen, die im Gehäuse nach dem Inneren desselben zu offen sind, wobei der Aufnahmeraum in beiden Richtungen länger als die Breite des Gelenkteiles des Klappdeckels bemessen ist. Dabei ist die Gelenkachse lose verschiebbar derart gelagert, dass der Klappdeckel aus dem Gehäuse herausnehmbar bzw. in das Gehäuse einsetzbar ist. Es handelt sich also um eine zweiteilige Ausführung von Klappdeckel und Gehäuse. Einteilige Klappdeckelausführungen werden in der DE 11 84 393 B als vorbekannter Stand der Technik genannt, jedoch als nachteilig kritisiert.

Der vorliegenden Erfindung liegt die Aufgabe zugrunde, ein Abdeckteil und eine elektrische Installationsvorrichtung der eingangs genannten Art derart auszugestalten, dass diese gegenüber dem nächstliegenden Stand der Technik konstruktiv vereinfacht und hinsichtlich ihrer Fertigungsfreundlichkeit verbessert sind.

Erfindungsgemäß wird dies dadurch erreicht, dass das Abdeckteil die Merkmale des Anspruchs 1 und die elektrische Installationsvorrichtung die Merkmale des Anspruchs 19 aufweist.

Besonders vorteilhaft ist es dabei, wenn die Oberseite des Betätigungselementes als ebene Fläche ausgebildet ist, die, wenn sich das Betätigungselement in seiner Ruheposition befindet, mit der Deckfläche des Rahmenkörpers fluchtet. Dadurch liegt bei einer standardmäßig vorgegebenen Größe der Außenkontur eines Rahmens zunächst in ergonomisch optimaler Ausbildung eine im Vergleich mit der bekannten Abdeckung größere Bedienfläche auf dem Betätigungselement vor, da dieses nicht durch darüber liegende Stege des Rahmenkörpers abgedeckt ist. Es brauchen dabei in materialökonomisch günstiger Weise für eine Bedienung keine durch den Rahmenkörper ragenden Vorsprünge auf dem Betätigungselement vorgesehen zu werden, sondern das Betätigungselement kann flach ausgeführt werden, so dass das Abdeckteil des Weiteren deswegen auch weniger schnell verschmutzt und sich leichter reinigen lässt.

Außerdem ist diese konstruktiv einfache erfindungsgemäße Ausbildung des Abdeckteils auch sehr fertigungsfreundlich, weil das Betätigungselement und der Rahmenkörper in wenig aufwändiger Weise einstückig, beispielsweise als Kunststoffspritzteil, hergestellt werden können. Hierbei können als bevorzugte Werkstoffe beispielsweise Polykarbonate, z. B. Polyoxymethylen, Polymethacrylsäuremethylester oder verstärkte Kunststoffe, wie faserverstärktes Polyamid, zum Einsatz kommen. Das Gelenk, über welches das Betätigungselement und der Rahmenkörper miteinander verbunden sind, kann dabei vorzugsweise ein Filmgelenk sein, so dass Rahmenkörper und Betätigungselement einstückig ausgebildet sind. Das Gelenk kann dabei für die dynamische Belastung, der es unterliegt, wenn das Betätigungselement unter dem Betätigungsdruck auf seine Oberseite aus der Ruheposition in die Schaltposition gebracht wird, ausreichend bruchsicher und auch derart federnd ausgebildet werden, dass das Betätigungselement nach Wegfall des Betätigungsdruckes aus seiner Schaltposition selbsttätig in seine Ruheposition zurückkehrt.

Der Rahmenkörper kann auf seiner Unterseite Befestigungselemente zur form-, kraft-und/oder stoffschlüssigen Verbindung mit einem zur Befestigung an dem Sockelteil der erfindungsgemäßen elektrischen Installationsvorrichtung dienenden Verbindungsteil aufweisen. Mit diesem Verbindungsteil kann das erfindungsgemäße Abdeckteil zu einer einzigen Baueinheit verbunden werden, für die sich - wie nachfolgend noch im Detail dargestellt - der Montageaufwand an einer elektrischen Installationsvorrichtung gegenüber den eingangs beschriebenen Montageschritten noch mehr reduziert.

Mit dem Vorteil einer flexiblen Verwendbarkeit kann des Weiteren auch vorgesehen sein, dass der Rahmenkörper zwei oder mehr Betätigungselemente für elektrische Installationsvorrichtungen mit Schaltfunktion und/oder Strukturen für weitere elektrische Installationsvorrichtungen mit anderer als Schaltfunktion, wie z. B. eine Steckdosenabdeckung, umfasst.

Schließlich ist es auch möglich, mit dem erfindungsgemäßen Abdeckteil auf verschiedenartige Weise einen Tapetenausgleich zu realisieren, worauf ebenfalls nachfolgend noch im Detail eingegangen wird.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll im Folgenden die Erfindung näher erläutert werden. Dabei zeigen:
- Fig. 1: in einer Draufsicht eine erste Ausführung eines erfindungsgemäßen Abdeckteils,
- Fig. 2: die erste Ausführung eines erfindungsgemäßen Abdeckteils in einer Schnittansicht gemäß der Linie II-II in Fig. 1,
- Fig. 3: die erste Ausführung eines erfindungsgemäßen Abdeckteils in einer Schnittansicht gemäß der Linie III-III in Fig. 1,
- Fig. 4: die erste Ausführung eines erfindungsgemäßen Abdeckteils in einer perspektivischen Darstellung,
- Fig. 5: in einer Draufsicht eine zweite Ausführung eines erfindungsgemäßen Abdeckteils,
- Fig. 6: die zweite Ausführung eines erfindungsgemäßen Abdeckteils in einer Schnittansicht gemäß der Linie VI-VI in Fig. 5, zusammen mit einer ersten Ausführung eines erfindungsgemäßen Klemmteils zur Verbindung mit einem Sockelteil einer erfindungsgemäßen elektrischen Installationsvorrichtung,
- Fig. 7: die zweite Ausführung eines erfindungsgemäßen Abdeckteils in einer Schnittansicht gemäß der Linie VII-VII in Fig. 6, zusammen mit der ersten Ausführung des erfindungsgemäßen Klemmteils zur Verbindung mit einem Sockelteil einer erfindungsgemäßen elektrischen Installationsvorrichtung,
- Fig. 8: die zweite Ausführung eines erfindungsgemäßen Abdeckteils in einer perspektivischen Explosionsdarstellung, zusammen mit der ersten Ausführung des erfindungsgemäßen Klemmteils zur Verbindung mit einem Sockelteil einer elektrischen Installationsvorrichtung,
- Fig. 9: die zweite Ausführung eines erfindungsgemäßen Abdeckteils in einer weiteren perspektivischen Explosionsdarstellung, zusammen mit der ersten Ausführung des erfindungsgemäßen Klemmteils zur Verbindung mit einem Sockelteil einer erfindungsgemäßen elektrischen Installationsvorrichtung,
- Fig. 10: in einer Draufsicht eine dritte Ausführung eines erfindungsgemäßen Abdeckteils,
- Fig. 11: die dritte Ausführung eines erfindungsgemäßen Abdeckteils in einer Schnittansicht gemäß der Linie XI-XI in Fig. 10, zusammen mit einer zweiten Ausführung eines erfindungsgemäßen Klemmteils zur Verbindung mit einem Sockelteil einer elektrischen Installationsvorrichtung,
- Fig. 12: die dritte Ausführung eines erfindungsgemäßen Abdeckteils in einer Schnittansicht gemäß der Linie XII-XII in Fig. 10, zusammen mit der zweiten Ausführung des erfindungsgemäßen Klemmteils zur Verbindung mit einem Sockelteil einer erfindungsgemäßen elektrischen Installationsvorrichtung,
- Fig. 13: die dritte Ausführung eines erfindungsgemäßen Abdeckteils in einer perspektivischen Explosionsdarstellung, zusammen mit der zweiten Ausführung des erfindungsgemäßen Klemmteils zur Verbindung mit einem Sockelteil einer erfindungsgemäßen elektrischen Installationsvorrichtung,
- Fig. 14: eine vierte Ausführung eines erfindungsgemäßen Abdeckteils in einer perspektivischen Darstellung,
- Fig. 15: bis 19 in Schnittdarstellungen, verschiedenartige in der Praxis auftretende Montagebedingungen für erfindungsgemäße elektrische Installationsvorrichtungen zur Veranschaulichung der Notwendigkeit eines Tapetenausgleichs, der mit einem erfindungsgemäßen Abdeckteil vorgenommen werden kann,
- Fig. 20: in einer Unteransicht, eine fünfte Ausführung eines erfindungsgemäßen Abdeckteils mit einer ersten Ausführung eines Tapetenausgleichs mit Hilfe eines Blendrahmens,
- Fig. 21: die fünfte Ausführung eines erfindungsgemäßen Abdeckteils in einer Seitenansicht,
- Fig. 22: die fünfte Ausführung eines erfindungsgemäßen Abdeckteils in einer Schnittansicht gemäß der Linie XXII-XXII in Fig. 20,
- Fig. 23: die fünfte Ausführung eines erfindungsgemäßen Abdeckteils in der Draufsicht,
- Fig. 24: in einer Fig. 20 entsprechenden Unteransicht, den zum Tapetenausgleich verwendeten Blendrahmen der fünften Ausführung eines erfindungsgemäßen Abdeckteils als Einzelteil,
- Fig. 25: den Blendrahmen der fünften Ausführung eines erfindungsgemäßen Abdeckteils in einer Fig. 21 entsprechenden Seitenansicht,
- Fig. 26: den Blendrahmen der fünften Ausführung eines erfindungsgemäßen Abdeckteils in einer Fig. 22 entsprechenden Schnittansicht gemäß der Linie XXVI-XXVI in Fig. 24,
- Fig. 27: den Blendrahmen der fünften Ausführung eines erfindungsgemäßen Abdeckteils in einer Fig. 23 entsprechenden Draufsicht,
- Fig. 28: den Blendrahmen der fünften Ausführung eines erfindungsgemäßen Abdeckteils in perspektivischer Darstellung,
- Fig. 29: in einer Schnittansicht gemäß der Linie XXX-XXX in Fig. 5, eine erfindungsgemäße elektrische Installationsvorrichtung und dabei eine Darstellung, wie eine zweite Ausführung eines Tapetenausgleichs bei der zweiten Ausführung eines erfindungsgemäßen Abdeckteils realisiert werden kann, wobei sich das Abdeckteil in einem ersten Wandabstand befindet,
- Fig. 29a: eine Fig. 29 zugeordnete Schnittansicht gemäß der Linie VII-VII in Fig. 5, jedoch jeweils nur im Halbschnitt durch die rechte Seite und in vergrößertem Maßstab,
- Fig. 30: eine Schnittansicht wie in Fig. 29, wobei sich das Abdeckteil jedoch in einem zweiten Wandabstand befindet,
- Fig. 30a: eine Fig. 30 zugeordnete Schnittansicht in einer Darstellungsart wie in Fig. 29a,
- Fig. 30b: eine vergrößerte Darstellung eines in Fig. 30a gezeigten Klemmnockens,
- Fig. 31: in einer Unteransicht, ein Verbindungsteil einer sechsten Ausführung eines erfindungsgemäßen Abdeckteils mit einer dritten Ausführung eines Tapetenausgleichs unter Verwendung eines Ausgleichselementes,
- Fig. 32: das erfindungsgemäße Verbindungteil der sechsten Ausführung eines erfindungsgemäßen Abdeckteils in einer Schnittansicht gemäß der Linie XXXII-XXXII in Fig. 31,
- Fig. 32a: die in Fig. 32 mit E bezeichnete Einzelheit des Verbindungteils der sechsten Ausführung eines erfindungsgemäßen Abdeckteils,
- Fig. 33: das erfindungsgemäße Verbindungteil der sechsten Ausführung eines erfindungsgemäßen Abdeckteils in einer Schnittansicht gemäß der Linie XXXIII-XXXIII in Fig. 31,
- Fig. 34: das erfindungsgemäße Verbindungsteil der sechsten Ausführung eines erfindungsgemäßen Abdeckteils in perspektivischer Darstellung,
- Fig. 35: in einer Schnittansicht gemäß der Linie XXX-XXX in Fig. 5 eine Fig. 30 entsprechende Darstellung, wie die dritte Ausführung eines Tapetenausgleichs realisiert werden kann, wobei sich das Abdeckteil in einem ersten Wandabstand befindet,
- Fig. 36: wie in Fig. 35, in einer Schnittansicht gemäß der Linie XXX-XXX in Fig. 5 eine Fig. 29 entsprechende Darstellung, wie die dritte Ausführung eines Tapetenausgleich realisiert werden kann, wobei sich das Abdeckteil in einem zweiten Wandabstand befindet.

In den Figuren der Zeichnung sind gleiche bzw. einander entsprechende Teile stets mit denselben Bezugszeichen versehen, so dass sie in der Regel auch jeweils nur einmal beschrieben werden.

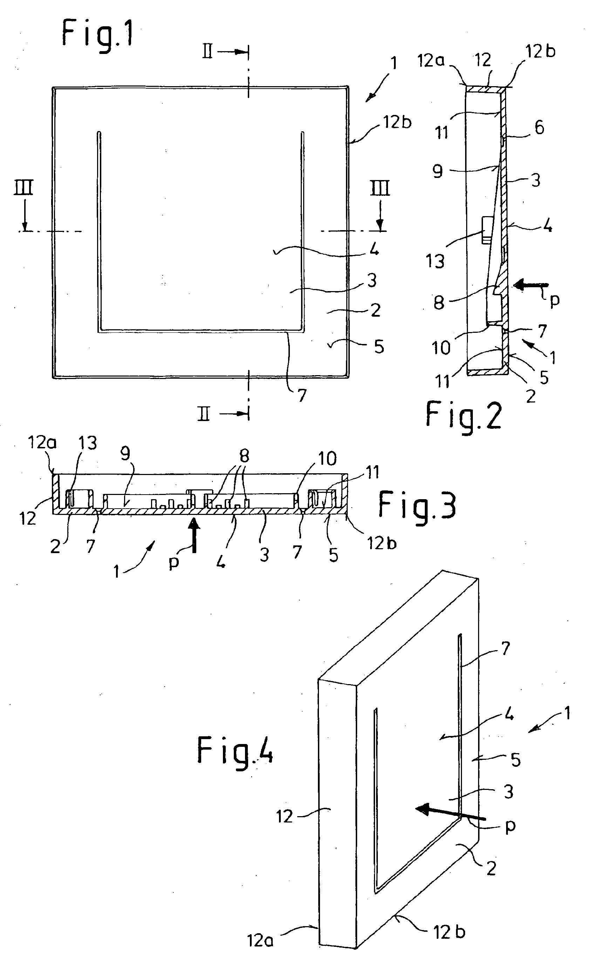

Wie sich zunächst aus Fig. 1 bis 4 ergibt, weist ein Abdeckteil 1, insbesondere ein Abdeckrahmen, einen insbesondere in der Draufsicht quadratisch ausgebildeten Rahmenkörper 2 und ein Betätigungselement 3 auf. Das Betätigungselement 3 ist einer elektrischen Installationsvorrichtung zugeordet, welche einen Tastschalter aufweist, der über das Betätigungselement 3 einen Schaltvorgang auslöst. Dabei legt das Betätigungselement 3 unter einem Betätigungsdruck p auf seine Oberseite 4 einen Betätigungsweg (in einer Richtung senkrecht zur Zeichenebene der Fig. 1 nach unten oder in Fig. 2 nach links oder in Fig. 3 nach oben) aus einer jeweils in den Figuren gezeigten Ruheposition in eine Schaltposition zurück.

Nachfolgend wird, wenn die Begriffe "unten" und "oben" verwendet werden, unter "unten" die einem Sockelteil einer elektrischen Installationsvorrichtung zugewandte, im Montagezustand verdeckte Seite des Abdeckteils 1 oder von dessen Bestandteilen und unter "oben" die Schauseite des Abdeckteils 1 verstanden.

Die Oberseite 4 des Betätigungselementes 3 ist bevorzugt als ebene Fläche ausgebildet, die, wenn sich das Betätigungselement 3 in der Ruheposition befindet, mit einer ebenfalls ebenen Deckfläche 5 des Rahmenkörpers 2 fluchtet. Der Rahmenkörper 2 umgibt das Betätigungselement 3 randseitig und ist mit dem Betätigungselement 3 einstückig ausgebildet, indem er - wie Fig. 2 zu entnehmen ist - mit dem Betätigungselement 3 an einer Seite erfindungsgemäß über ein Gelenk 6, insbesondere ein Filmgelenk verbunden ist. Das Gelenk 6 ist derart federnd ausgebildet, dass das Betätigungselement 3 nach Wegfall des Betätigungsdruckes p aus seiner Schaltposition selbsttätig in die Ruheposition zurückkehrt. Die Schalt- und Rückstellbewegung des Betätigungselementes 3 ist jeweils eine Schwenkbewegung um die Achse des Filmgelenkes 6. Das Betätigungselement 3 ist dabei zungenartig aus dem Rahmenkörper 2 freigespart, d. h. an den drei nicht über das Gelenk 6 mit dem Rahmenkörper 2 verbundenen Seiten verläuft U-förmig ein Schlitz 7 zwischen Betätigungselement 3 und Rahmenkörper 2.

Das Betätigungselement 3 kann - wie insbesondere Fig. 2 und 3 veranschaulichen - mindestens einen Vorsprung 8, wie einen insbesondere keilförmigen Schaltnocken, aufweisen, der sich auf der Unterseite 9 befindet und in der Schaltposition des Betätigungselementes 3 in dem Schalter den Schaltvorgang auslöst. Wie Fig. 3 zeigt, können auch mehrere derartige Schaltnocken 8 vorgesehen sein.

Des Weiteren kann zur Stabilisierung und besseren Führung seiner Bewegung das Betätigungselement 3 - neben dem Schlitz 7 angeordnet - einen von der Unterseite 9 abstehenden Randsteg 10 aufweisen. Die Höhe des Randsteges 10 kann dabei, wie insbesondere Fig. 2 zeigt, in Anpassung an die Auslenkung bei der Schwenkbewegung vom freien Ende des Betätigungselementes 3 ausgehend in Richtung auf das Gelenk 6 hin abnehmen.

Ebenso kann auch der Rahmenkörper 2 in an sich bekannter Art einen umlaufenden, von seiner Unterseite 11 abstehenden Randsteg 12 mit einer Unterkante 12a aufweisen. Dadurch erscheint der Rahmenkörper 2 in der perspektivischen Darstellung von Fig. 4 quaderförmig. Es ist dabei nicht zwingend notwendig, dass zwischen der Deckfläche 5 und dem Randsteg 12 Kanten 12b ausgebildet sind; es könnten dort auch Verrundungen vorgesehen sein.

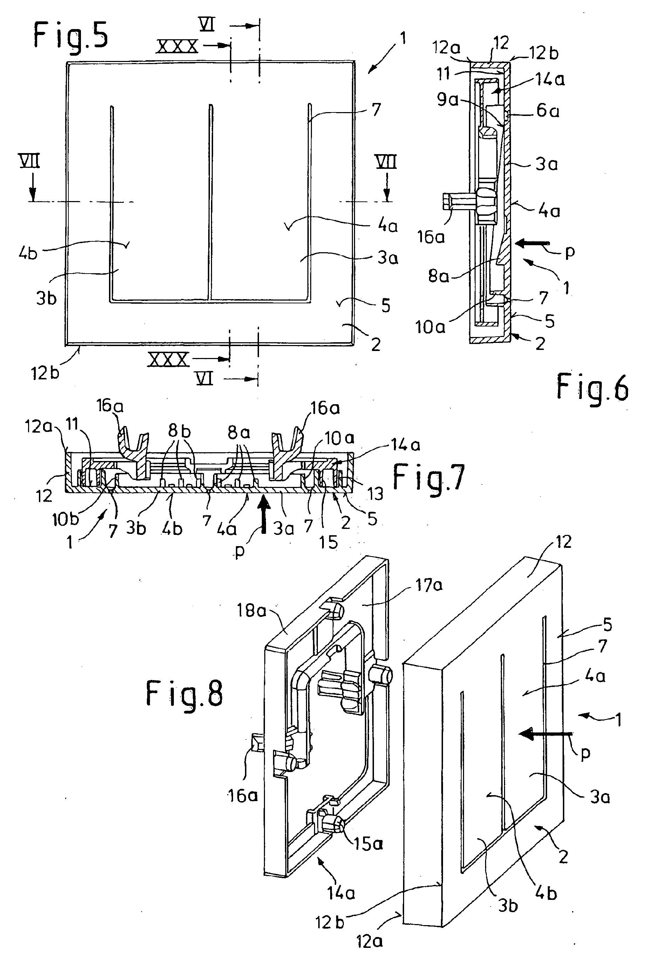

Der Rahmenkörper 2 kann - wie in Fig. 2 und 3 dargestellt - auf seiner Unterseite 11 Befestigungselemente 13 aufweisen, deren Funktion unter Bezugnahme auf die nachfolgend beschriebene, in Fig. 5 bis 9 dargestellte zweite Ausführung eines erfindungsgemäßen Abdeckteils 1 erläutert wird.

Die zweite Ausführung der Erfindung unterscheidet sich von der ersten zunächst dadurch, dass ein Rahmenkörper 2 zwei Betätigungselemente 3a, 3b umfasst, die jeweils in der erfindungsgemäßen elektrischen Installationsvorrichtung vorhandenen Tastschaltern zugeordet sind. In den Figuren der Zeichnung sind die dabei dem ersten Betätigungselement 3a zugehörigen Teile zusätzlich zu der in Fig. 1 bis 4 verwendeten Bezugszeichennummer mit dem Buchstaben a und die dem zweiten Betätigungselement 3b zugehörigen Teile zusätzlich mit dem Buchstaben b bezeichnet und werden nicht noch einmal eigens beschrieben.

In der zweiten Ausführung der Erfindung hat der oben erwähnte Schlitz 7 in der Draufsicht die Form eines liegenden E. Jedes der Betätigungselemente 3a, 3b wird vom Rahmenkörper 2 nur teilweise - einmal seitlich und zum Anderen an seinem freien Ende - umfasst. Die Betätigungselemente 3a, 3b sind gleichartig ausgebildet und liegen getrennt durch den Schlitz 7 nebeneinander.

Zusätzlich zum erfindungsgemäßen Abdeckteil 1 ist bei der zweiten Ausführung der Erfindung in Fig. 6 bis 9 ein erfindungsgemäßes Verbindungsteil 14a dargestellt. Dieses Verbindungsteil 14a besteht bei dieser Ausführung aus Kunststoff und dient zur Montage des erfindungsgemäßen Abdeckteils 1 in einer erfindungsgemäßen elektrischen Installationsvorrichtung.

Das Verbindungsteil 14a kann über eigene Verbindungselemente 15a und die bereits erwähnten, auf der Unterseite 11 des Rahmenkörpers 2 befindlichen Befestigungselemente 13 (bei dieser Ausführung nur in Fig. 7 zu sehen) form- kraft- und/oder stoffschlüssig an dem erfindungsgemäßen Abdeckteil 1 befestigt werden. Dazu sind als Verbindungselemente 15a am Verbindungsteil 14a konkret Hohlzapfen vorgesehen, die in die als hohlzylindrische Ansätze ausgebildeten Befestigungselemente 13 des Abdeckteils 1 formangepasst - gegebenenfalls mit Presspassung und/oder einer Verrastung - eingesteckt und in diesen optional - beispielsweise durch Verkleben - zusätzlich stoffschlüssig unverlierbar befestigt werden können. Im letzteren Fall wird dabei aus dem Abdeckteil 1 und dem Verbindungsteil 14a eine einzige Baueinheit gebildet.

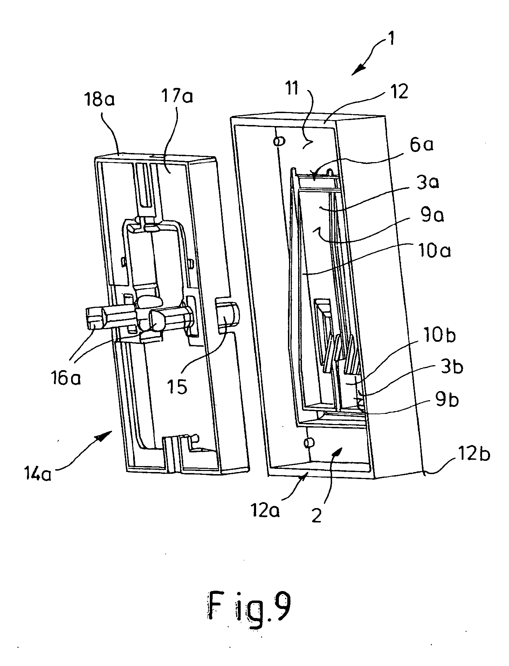

Das Verbindungsteil 14a kann, was seine Montage an der elektrischen Installationsvorrichtung betrifft - wie dargestellt - insbesondere als Klemmteil ausgebildet sein. Es weist zu diesem Zweck Klemmnocken 16a auf, die zum Verbinden insbesondere kraft-und formschlüssig mit der elektrischen Installationsvorrichtung zusammenwirken. Diese Klemmnocken 16a sitzen - wie die Hohlzapfen, nur anderseitig - auf einer, nur in Fig. 8 und 9 bezeichneten Basisplatte 17a des Verbindungsteils 14a. Die Basisplatte 17a ist von einem Randsteg 18a eingefasst, dessen Höhe etwas kleiner als die Höhe des Randstegs 12 des Abdeckteils 1 ist und im Montagezustand parallel zu diesem verläuft.

Der bei der Darstellung des Standes der Technik eingangs beschriebene Montagevorgang reduziert sich bei Verwendung einer Baueinheit aus Abdeckteil 1 und Verbindungsteil 14a vorteilhafterweise erfindungsgemäß dabei auf nur zwei Arbeitsschritte: Das Sockelteil der elektischen Installationsvorrichtung in einer Dose festkrallen, und dann die Baueinheit aus Abdeckteil 1 und Verbindungsteil 14a in das Sockelteil einclipsen.

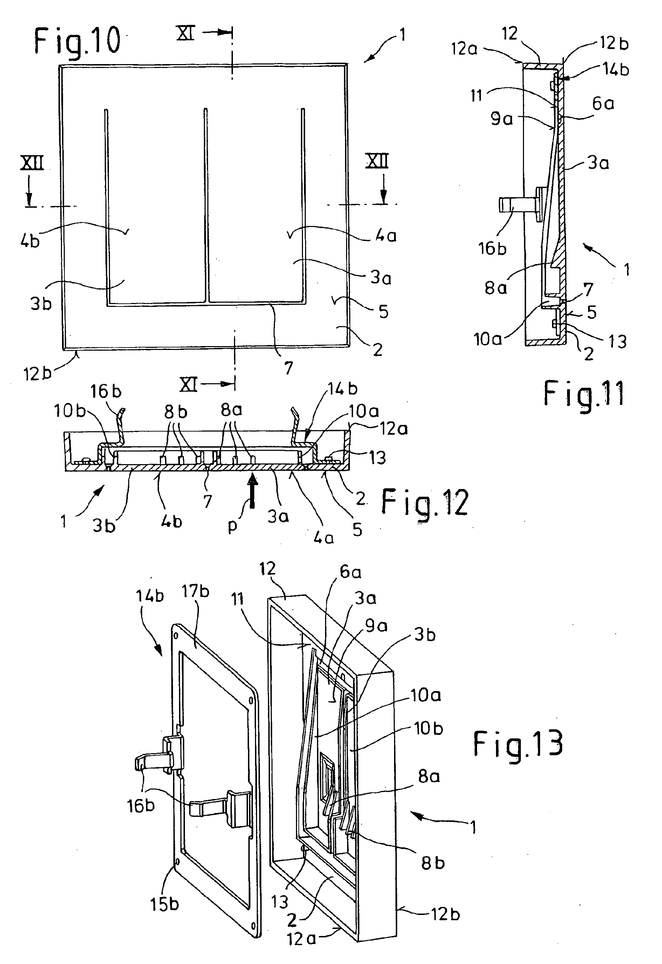

Die in Fig. 10 bis 13 dargestellte dritte Ausführung der Erfindung unterscheidet sich von der zweiten dadurch, dass das Verbindungsteil 14b aus Metall besteht. Dies betrifft sowohl seine Basisplatte 17b, als auch die zur Verbindung mit der elektrischen Installationsvorrichtung dienenden Teile. Als solche sind bei dieser Ausführung zwei Klemmfedern 16b vorgesehen. Die Verbindungselemente 15b zur Verbindung mit dem Rahmenkörper 2 sind als Löcher ausgeführt, während die korrespondierenden Befestigungselemente 13 am Rahmenkörper 2 als Zapfen mit Vollquerschnitt ausgebildet sind. Wie in der zweiten Ausführung ist das Verbindungsteil 14b einstückig - jedoch nicht als Spritzgießteil, sondern als Biege-Stanzteil ausgeführt. Anstelle der dargestellten Verbindungselemente 15b des Verbindungsteils 14b und der korrespondierenden Befestigungselemente 13 am Rahmenkörper 2 ist es auch möglich, dass komplette Konturen des Biege-Stanzteils von Kunststoff - beispielsweise durch Umspritzen - umfasst werden.

Bezüglich der bei der zweiten und dritten Ausführung der Erfindung verwendeten Bezugszeichen sei hier bemerkt, dass für die bei der zweiten und dritten Ausführung verwendeten Zahlen 14 bis 18 der Zusatzbuchstabe a oder b sich nicht auf gleiche oder ähnliche Teile der Betätigungselemente 3a, 3b, sondern auf korrespondierende Teile der jeweiligen erfindungsgemäßen Verbindungsteile 14a, 14b bezieht.

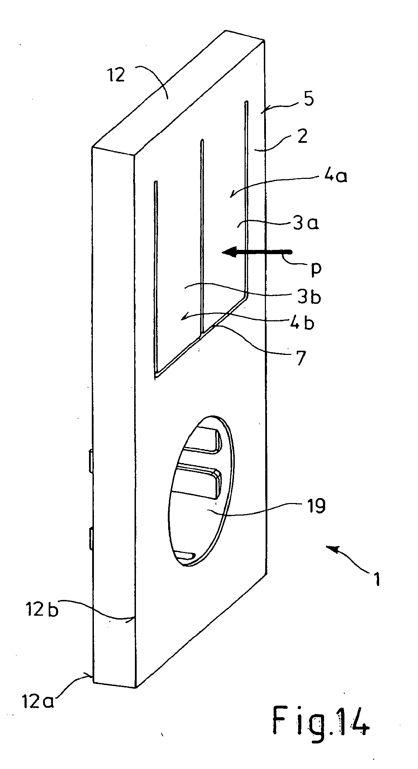

Die vierte, in Fig. 14 gezeigte Ausführung der Erfindung unterscheidet sich von der zweiten und dritten Ausführung dadurch, dass der Rahmenkörper 2 nicht nur einstückig mit zwei Betätigungselementen 3a, 3b ausgebildet ist, die jeweils zum Schalten von erfindungsgemäßen elektrischen Installationsvorrichtungen dienen, sondern dass in den Rahmenkörper 2 zusätzlich noch eine Struktur 19 für eine weitere elektrische Installationsvorrichtung mit anderer als Schaltfunktion eingebettet ist. Konkret handelt es sich dabei um eine Steckdosen-, und zwar eine Schuko-Steckdosenabdeckung.

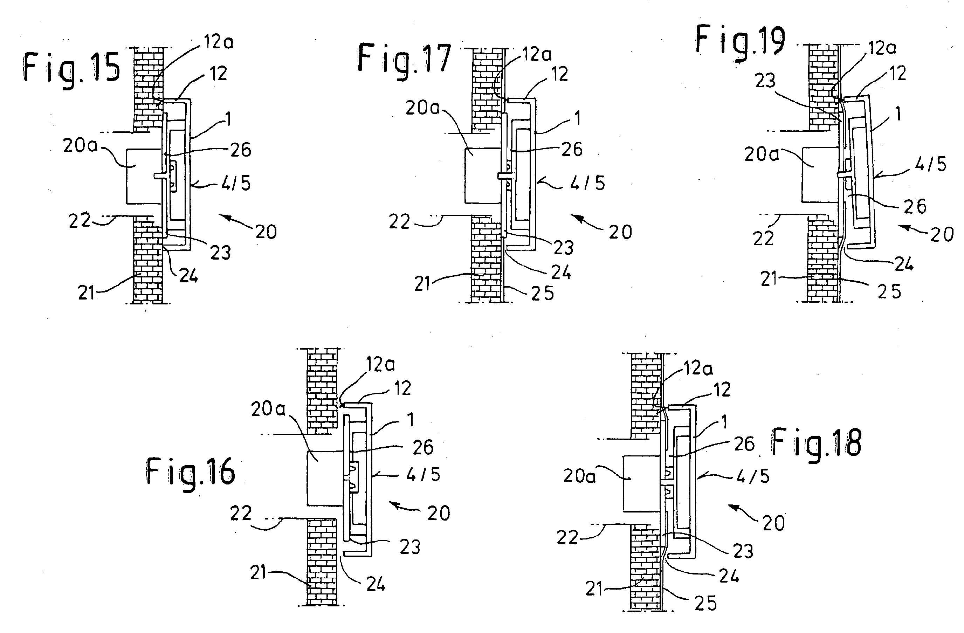

In den in Fig. 15 bis 19 gezeigten Schnittdarstellungen sind verschiedenartige in der Praxis auftretende Montagebedingungen für erfindungsgemäße elektrische Installationsvorrichtungen 20 dargestellt, deren Sockelteil 20a sich insbesondere in jeweils in einer Wand 21 montierten Dosen 22 befinden. Aus diesen unterschiedlichen Montagebedingungen ergibt sich die Notwendigkeit eines Tapetenausgleichs. Ein solcher kann mit dem erfindungsgemäßen Abdeckteil 1 problemlos vorgenommen werden, wofür bei den noch folgenden Ausführungen der Erfindung verschiedene technische Lösungen beschrieben werden.

Fig. 15 zeigt zunächst einen Montagefall, bei dem die Dose 22 mit einem Tragring 23 fachgerecht auf der Wand 21 aufliegt. Der umlaufende Randsteg 12 des Abdeckteils 1 liegt dabei mit seiner Unterkante 12a ebenfalls auf der Wand 21 auf. Die unter dem Abdeckteil 1 liegende Dose 22 einschließlich des Sockelteils 20a der elektrischen Installationsvorrichtung 20 ist spaltfrei abgedeckt. Ein Zwischenraum 24 zwischen der Unterkante 12a des umlaufenden Randstegs 12 des Abdeckteils 1 und der Wand 21 ist nicht vorhanden bzw. nimmt den Wert Null an.

Fig. 16 zeigt einen Montagefall, bei dem die Dose 22 mit ihrem Tragring 23 gegenüber der Wand 21 - beispielsweise um 0,8 mm - vorsteht. Der Zwischenraum 24 zwischen der Unterkante 12a des umlaufenden Randstegs 12 des Abdeckteils 1 und der Wand 21 bildet einen offenen Spalt 24, eine sogenannte Schattenfuge.

Fig. 17 zeigt einen Montagefall, bei dem - im Gegensatz zu den beiden vorhergehenden - die Wand 21 mit Tapete 25 überklebt ist. Die Dose 22 liegt mit ihrem Tragring 23 auf der Wand 21 auf, und die Tapete 25 endet fachgerecht neben dem Tragring 23 der Dose 22. Der umlaufende Randsteg 12 des Abdeckteils 1 liegt mit seiner Unterkante 12a auf der Tapete 25 auf. Die unter dem Abdeckteil 1 liegende Dose 22 einschließlich des Sockelteils 20a der elektrischen Installationsvorrichtung 20 ist spaltfrei abgedeckt, da der Zwischenraum 24 zwischen der Unterkante 12a des umlaufenden Randstegs 12 des Abdeckteils 1 und der Wand 21 durch die Tapete 25 ausgefüllt wird.

Fig. 18 zeigt ebenfalls einen Montagefall, bei dem die Wand 21 mit Tapete 25 überklebt ist. Die Dose 22 liegt mit ihrem Tragring 23 auf der Wand 21 auf, aber die Tapete 25 endet nicht fachgerecht neben dem Tragring 23 der Dose 22, sondern überlappt diesen umfangsgemäß gleichmäßig. Der umlaufende Randsteg 12 des Abdeckteils 1 liegt mit seiner Unterkante 12a auf der Tapete 25 auf. Auch hier sind die unter dem Abdeckteil 1 liegende Dose 22 und das Sockelteil 20a der elektrischen Installationsvorrichtung 20 spaltfrei abgedeckt, da der Zwischenraum 24 zwischen der Unterkante 12a des umlaufenden Randstegs 12 des Abdeckteils 1 und der Wand 21 durch die Tapete 25 ausgefüllt ist.

Fig. 19 zeigt einen Montagefall ähnlich wie Fig. 18, nur dass hier die Tapete 25 den Tragring 23 der Dose 22 umfangsgemäß ungleichmäßig überlappt. Damit der umlaufende Randsteg 12 des Abdeckteils 1 mit seiner Unterkante 12a auf der Tapete 25 aufliegen kann, muss, um die unter dem Abdeckteil 1 liegende Dose 22 und das Sockelteil 20a der elektrische Installationsvorrichtung 20 spaltfrei abzudecken, eine Schrägstellung des Abdeckteils 1 erfolgen.

Aus der Figurenfolge 15 bis 19 wird ersichtlich, dass das Prinzip des Tapetenausgleichs darin besteht, bei den unterschiedlichen Montagefällen die Oberfläche 4/5 des Abdeckteils 1 relativ zum Sockelteil 20a der elektrischen Installationsvorrichtung 20 - durch unterschiedlich tiefes Einstecken des Abdeckteils 1 in das Sockelteil 20a der elektrischen Installationsvorrichtung 20 und Fixation in der jeweiligen Steckposition - in unterschiedlichem Abstand zu montieren. In den Figuren ist diesbezüglich allerdings als ebenfalls charakteristische Größe nicht dieser Abstand, sondern der Abstand zwischen der Unterseite des Abdeckteils 1 im Bereich des Verbindungsteils und der Oberseite des Tragrings 23 mit dem Bezugszeichen 26 eingetragen.

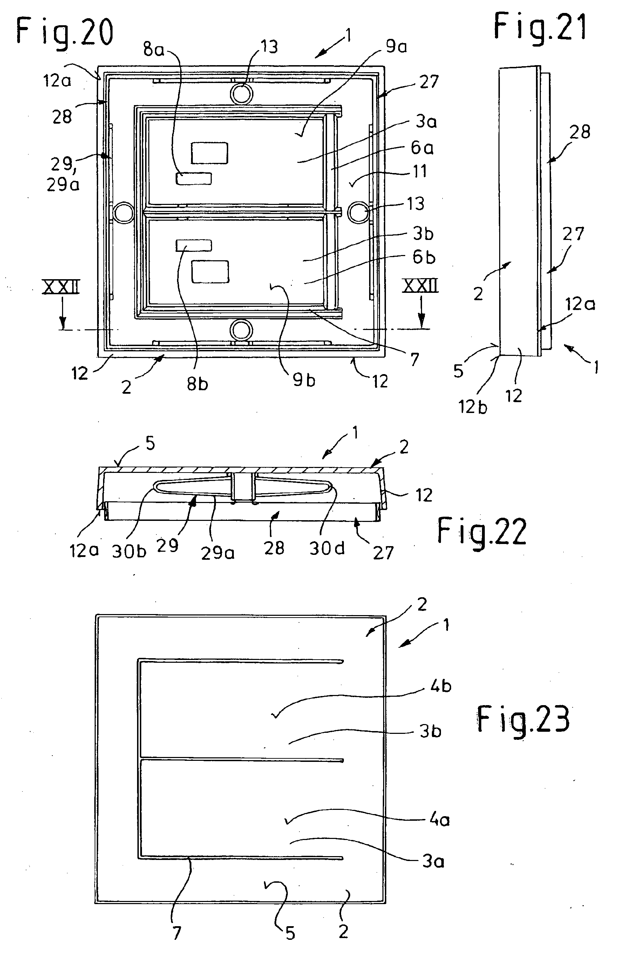

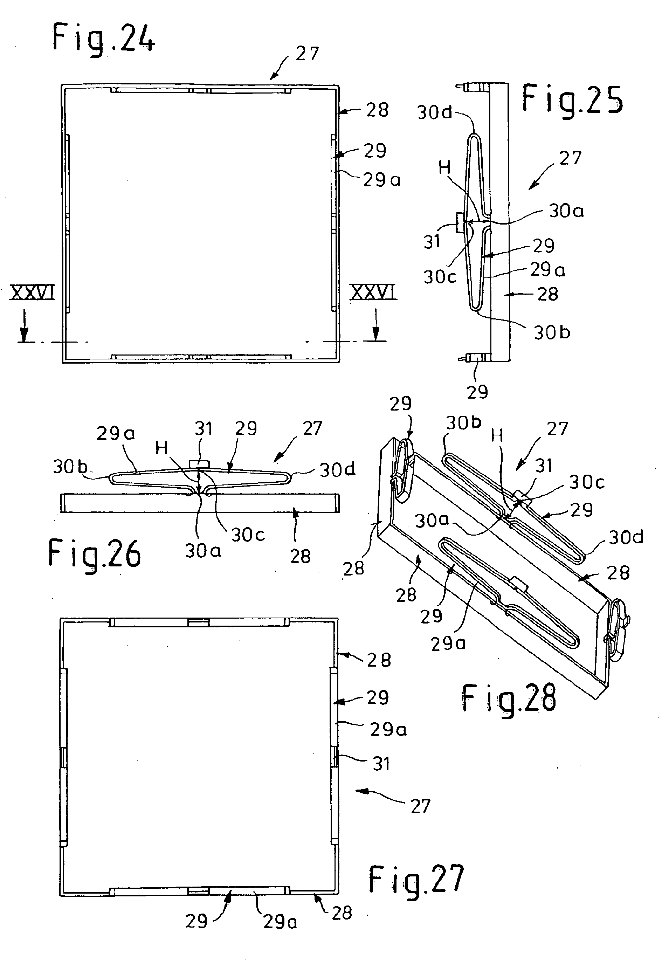

Fig. 20 bis 28 beziehen sich auf eine fünfte Ausführung eines erfindungsgemäßen Abdeckteils 1, bei der in einer ersten Ausführung ein Tapetenausgleich durch einen konstruktiv speziell ausgestalteten Blendrahmen vorgenommen werden kann. Der Blendrahmen ist mit dem Bezugszeichen 27 gekennzeichnet und in Fig. 20 bis 23 im Montagezustand an das Abdeckteil 1 sowie in Fig. 24 bis 28 als Einzelteil dargestellt.

Wie ein Vergleich der in Fig. 23 dargestellten Draufsicht mit Fig. 5 und 10 zeigt, ist die einstückig aus Betätigungselementen 3a, 3b und Rahmenkörper 2 ausgeführte Baueinheit der fünften Ausführung im Wesentlichen genauso ausgeführt wie die zweite und dritte Ausführung der Erfindung. Auch hinsichtlich der Art der Befestigungselemente 13 für das Verbindungsteil 14a stimmt sie mit der zweiten Ausführung überein.

Wie Fig. 20 bis 22 zeigen, wird der in der Draufsicht (Fig. 24, 27) quadratisch ausgebildete Blendrahmen 27 zur Montage von unten in den Rahmenkörper 2 des erfindungsgemäßen Abdeckteils 1 eingesetzt, wie dies insbesondere Fig. 22 veranschaulicht. Der Blendrahmen 27 besteht aus einem Rahmenabschnitt 28 und einem Kompensationsabschnitt 29, wodurch insbesondere der Letztere bewirkt, dass der Blendrahmen 27 im Montagezustand unter Federwirkung in unterschiedlichem Maß aus dem Rahmenkörper 2 heraustreten kann.

Der Rahmenabschnitt 28 ist eine umlaufende Rahmenstruktur, welche formangepasst innerhalb der Innenkontur des umlaufenden Randsteges 12 des Abdeckteils 1 angeordnet und dadurch im Abdeckteil 1 gehalten werden kann.

Der gesamte Kompensationsabschnitt 29 besteht aus vier diskreten federelastisch ausgebildeten Kompensationselementen 29a, die auf jeder Seite des Rahmenabschnitts 28 auf dessen Oberseite befestigt bzw. bevorzugt einstückig mit diesem ausgebildet sind. Jedes Kompensationselement 29a ist bügelartig nach der Art eines Rhombus ausgebildet und besitzt in den Rhombusecken vier Gelenke 30a, 30b, 30c, 30d, wie dies am besten Fig. 25, 26 und 28 zu entnehmen ist. Das untere Gelenk 30a ist mit dem Rahmenabschnitt 28 verbunden. Am oberen Gelenk 30c sitzt ein laschenartig ausgebildetes Befestigungselement 31, das zur Befestigung des Blendrahmens 27 am Rahmenkörper 2 in den Rahmenkörper 2, vorzugsweise in eine nicht dargestellte Aufnahme des Rahmenkörpers 2, von unten eingeclipst werden kann.

Durch die Ausbildung der beiden seitlichen Gelenke 30b und 30d, die als Federgelenke ausgebildet sind, kommt die federelastische Wirkung des Kompensationsabschnitts 29 zustande, wobei der Abstand H zwischen dem oberen Gelenk 30c und dem unteren Gelenk 30a veränderlich ist. Der Bereich, im Rahmen dessen dieser Abstand H veränderlich ist, kann entsprechend dem vorgesehenen Maximalmaß des Tapetenausgleichs konstruktiv festgelegt werden.

Nach der Montage des Blendrahmens 27 am Rahmenkörper 2 wird durch die Federwirkung des Kompensationsabschnittes 29 der Rahmenabschnitt 28 des Blendrahmens 27 unter der Unterkante 12a des umlaufenden Randstegs 12 des Rahmenkörpers 2 maximal herausgedrückt, wie dies insbesondere Fig. 21 und 22 zeigen. Wird nun das erfindungsgemäße Abdeckteil 1 in der erfindungsgemäßen elektrischen Installationsvorrichtung 20 montiert, so wird der Kompensationsabschnitt 29 unter Verringerung des Abstands H zwischen den Gelenken 30c, 30a zusammengedrückt, und der Abstand H zwischen dem oberen Gelenk 30c und dem unteren Gelenk 30a stellt sich auf einen Wert ein, der so groß ist, wie dies die Einbauverhältnisse zulassen bzw. zum Tapetenausgleich erfordern. In sämtlichen Montagefällen, wie sie in Fig. 15 bis 18 dargestellt sind, kann bedarfsweise so - gewissermaßen automatisch - ein Tapetenausgleich erfolgen.

Dies betrifft insbesondere auch einen Montagefall, wie dieser in Fig. 16 dargestellt ist, wobei der sich zwischen der Unterkante des umlaufenden Randstegs 12 des Abdeckteils 1 und der Wand 21 befindliche Spalt 24, die sogenannte Schattenfuge, durch den Blendrahmen 27 verschlossen wird.

Um die unter dem Abdeckteil 1 liegende Dose 22 und das Sockelteil 20a der elektrischen Installationsvorrichtung 20 in einem Montagefall gemäß Fig. 19 spaltfrei abzudecken, muss vorteilhafterweise keine Schrägstellung des gesamten Abdeckteils 1 erfolgen. Der Rahmenkörper 2 kann parallel zur Wand 21 positioniert werden, und nur der Blendrahmen 27 tritt mit seinem Rahmenabschnitt 28 an den verschiedenen Seiten bis zur Wandanlage unterschiedlich weit aus dem Rahmenkörper 2 heraus, da jedes Kompensationselement 29a unterschiedlich stark und unabhängig von den anderen wirksam werden kann.

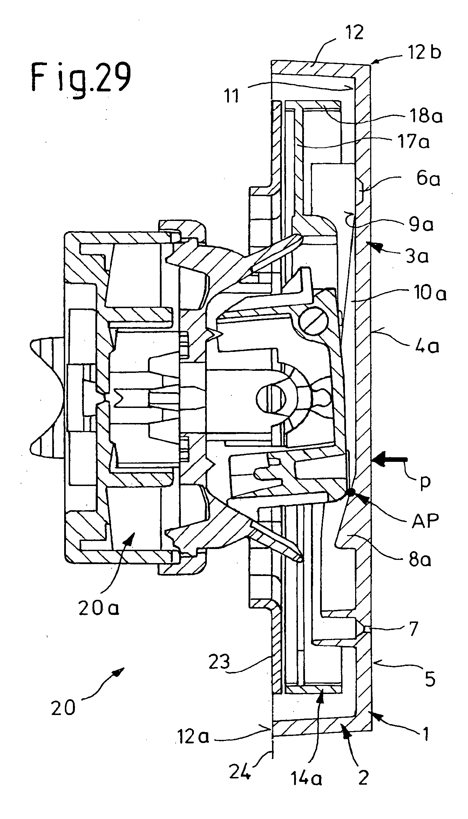

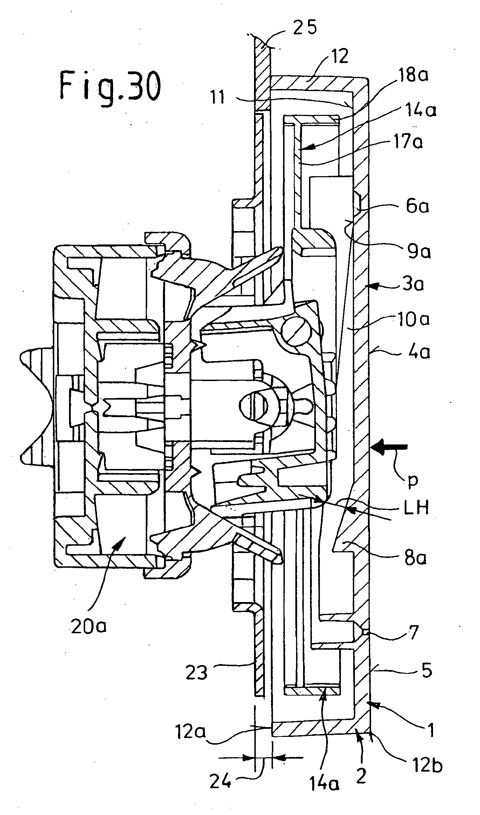

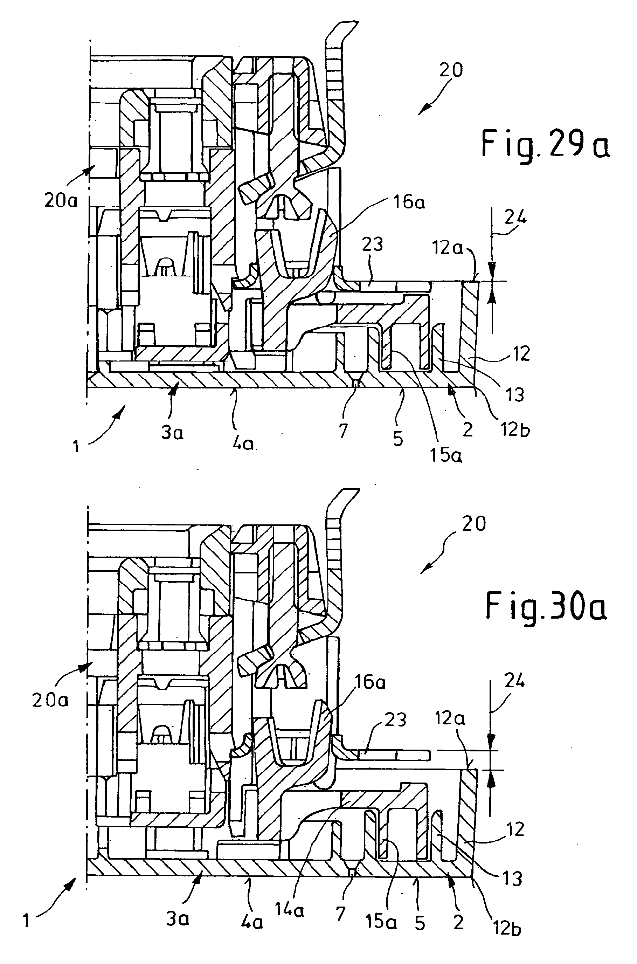

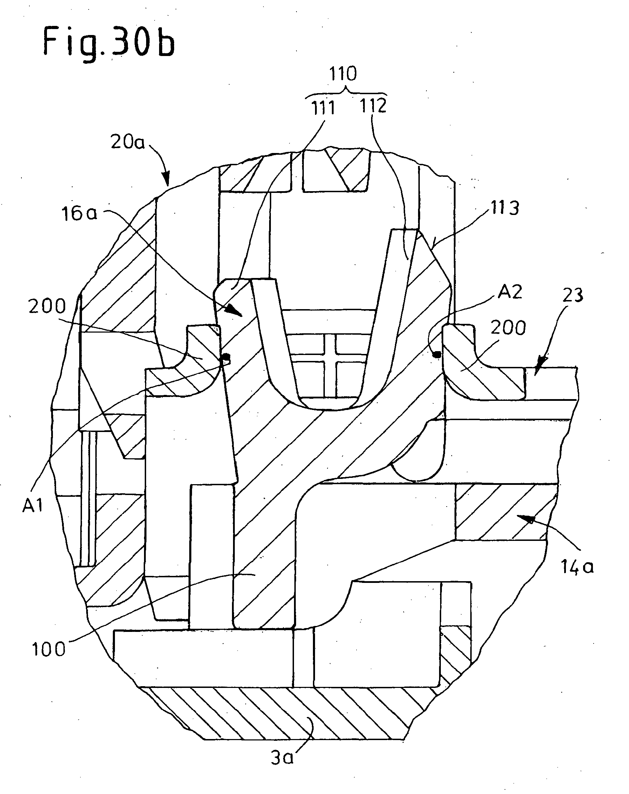

Fig. 29 und 30 sowie 29a und 30a zeigen, wie auf eine weitere Art ein Tapetenausgleich vorgenommen werden kann. Diese Figuren stehen konkret in Relation zur zweiten Ausführung eines erfindungsgemäßen Abdeckteils 1. Die beiden Schnittansichten 29 und 30 beziehen sich beide auf Schnitte gemäß der Linie XXX-XXX in Fig. 5, während die Schnittansichten 29a und 30a sich auf Schnitte gemäß der Linie VII-VII in Fig. 5 beziehen. Zusätzlich ist dabei die jeweils als Schalter ausgebildete erfindungsgemä-βe elektrische Installationsvorrichtung 20 dargestellt, in der das Abdeckteil 1 montiert ist.

Der Tapetenausgleich wird hier insbesondere - im Gegensatz zur vorhergehenden Ausführung - ohne zusätzliche Teile vorgenommen. Er erfolgt lediglich durch eine entsprechend den in der Praxis zu erwartenden Einbauverhältnissen (Fig. 15 bis 19) vorausschauend vorgenommene Dimensionierung und ein unterschiedlich tiefes Einstecken der Baueinheit aus Rahmenteil 2 und Verbindungsteil 14a in das Sockelteil 20a der elektrischen Installationsvorrichtung 20.

Fig. 29 und 29a zeigen dabei einen Montagefall, wie er in Fig. 15 dargestellt ist, in dem die unter dem Abdeckteil 1 liegende Dose 22 einschließlich des Sockelteils 20a der elektrischen Installationsvorrichtung 20 spaltfrei abgedeckt ist. Ein Zwischenraum 24 zwischen der Unterkante 12a des umlaufenden Randstegs 12 des Abdeckteils 1 und der Wand 21 ist nicht vorhanden bzw. nimmt den Wert Null an.

Fig. 30 und 30a zeigen einen Montagefall, wie er in Fig. 17 dargestellt ist. Es ist - bedingt durch das Vorhandensein von Tapete 25 (Fig. 30 oben) - ein Zwischenraum 24 zwischen der Unterkante 12a des umlaufenden Randstegs 12 des Abdeckteils 1 und der Wand 21 vorhanden.

Ein Vergleich zwischen Fig. 29 und 30 zeigt dabei, dass durch das unterschiedlich tiefe Einstecken der Baueinheit aus Rahmenteil 2 und Verbindungsteil 14a in das Sockelteil 20a der elektrischen Installationsvorrichtung 20 bei dem Einbauzustand gemäß Fig. 29 (Zwischenraum 24 gleich Null) der Schaltnocken 8a in einem Anlagepunkt AP unmittelbar auf der elektrischen Installationsvorrichtung 20 aufliegt. Stattdessen besteht an dieser Stelle bei dem Einbauzustand gemäß Fig. 30 ein mit dem Bezugszeichen LH bezeichneter Abstand zwischen dem Schaltnocken 8a und dem Sockelteil 20a der elektrischen Installationsvorrichtung 20. Dieser Abstand LH kann als Leerhub bezeichnet werden und ist beim Schalten durch die Schwenkbewegung des Betätigungselementes 3a zuerst zu überwinden, bevor der Schaltvorgang ausgelöst wird.

Es sei hier bemerkt, dass die Geometrie der Teile dabei auch so ausgelegt werden kann, dass der Zwischenraum 24 zwischen Wand 21 und Unterkante 12a des Rahmenteils 2 dann den Wert Null annimmt, wenn ein Montagefall wie in Fig. 16 - also eine vorstehende Wanddose 22 - vorliegt. Dann wäre bereits mit einem so dimensionierten Abdeckteil 1, wenn der Montagefall nach Fig. 15 vorliegt, ein Leerhub LH zu überwinden.

Im Sinne einer sicheren Montage ist es wichtig, dass bei jeder Einstecktiefe der Baueinheit aus Rahmenteil 2 und Verbindungsteil 14a in der elektrischen Installationsvorrichtung 20 ein fester Halt der Baueinheit gewährleistet ist. Dies wird insbesondere, wie Fig. 29a und 30a dies veranschaulichen und wie dies nachfolgend unter Bezugnahme auf Fig. 30b erläutert wird, durch eine spezielle Gestaltung der Klemmnocken 16a, aber auch des Tragrings 23 erreicht.

Die Klemmnocken 16a weisen jeweils einen stegartigen Sockelabschnitt 100 auf, mittels dessen sie am Klemmteil 14a gehalten sind. Auf diesem Sockelabschnitt 100 sitzt ein - im Querschnitt gesehen - sich V-förmig aufweitender Klemmabschnitt 110 mit einem ersten Klemmschenkel 111 und einem zweiten Klemmschenkel 112, wobei der erste Klemmschenkel 111 etwas kürzer als der zweite Klemmschenkel 112 ist und die Klemmschenkel 111, 112 in asymmetrischer Weise auf dem Sockelabschnitt 100 fu-βen. Der zweite Klemmschenkel 112 ist durch das Vorhandensein einer Einführschräge 113 an seinem freien Ende spitz ausgebildet, während der erste Klemmschenkel 111 stumpf ausgebildet ist. Die beiden Klemmschenkel 111, 112 sind elastisch rückfedernd gegeneinander drückbar.

Die Klemmnocken 16a werden in nicht näher bezeichneten Öffnungen des Tragrings 23 verklemmt. Diese Öffnungen sind durch einen sich in Richtung Wand 21 leicht trichterartig verjüngenden ebenfalls federelastischen Randsteg 200 eingefasst. Zur Montage werden die Klemmnocken 16a unter einer Bewegung gegeneinander, wobei über die Einführschräge 113 einerseits der dazu notwendige seitliche Druck erzeugt wird, die Einführschräge 113 aber andererseits auch leicht aufweitend auf den trichterartigen Randsteg 200 des Tragrings 23 wirkt, einfach in die Öffnungen des Tragrings 23 eingedrückt. Diese Bewegung wird dadurch beendet, dass die Unterkante 12a des Randsteges 12 des Rahmenkörpers 2 auf der Wand 21 oder der Tapete 25 zur Anlage kommt und der Tapetenausgleich somit hergestellt ist. Zwischen jedem Klemmschenkel 111, 112 und dem Randsteg 200 des Tragrings 23 bildet sich dabei an den in Fig. 30b mit den Bezugszeichen A1 und A2 bezeichneten - aufgrund der Elastizität der Teile flächigen - Anlagestellen eine kraft- und formschlüssige Verbindung aus. Durch diese Verbindung wird das Klemmstück 14a im Tragring 23 gehalten. Bei einer Demontage kann die Verbindung durch ein Herausziehen der aus Rahmenteil 2 und Verbindungsteil 14a bestehenden Baueinheit aus dem Tragring 23 wieder aufgehoben werden. Hierbei werden die Klemmschenkel 111, 112 wiederum - bedingt durch ihre V-förmige Stellung zueinander - gegeneinander gedrückt, so dass die Klemmnocken 16a die Öffnungen im Tragring 23 passieren können.

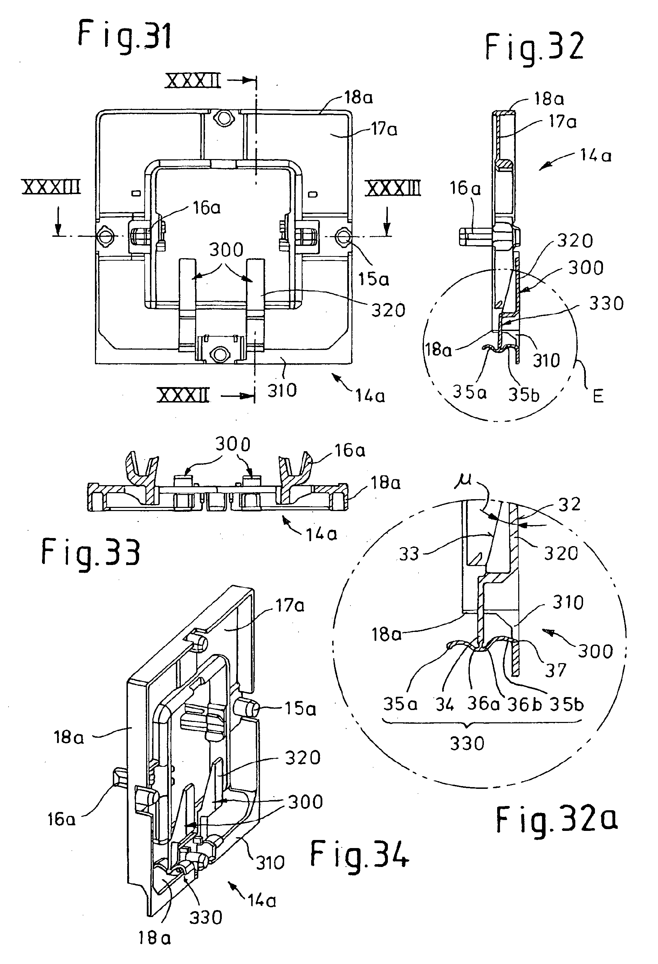

Die konstruktive Grundlage für die in Fig. 31 bis 36 dargestellte dritte Ausführung eines Tapetenausgleichs ist zunächst die gleiche wie bei der zweiten Ausführung und wird nicht nochmals beschrieben.

Da der bei der zweiten Ausführung vorhandene Leerhub LH unter Umständen das Schaltgefühl beeinträchtigen kann, wird die dritte Ausführung unter Verwendung eines Ausgleichselementes 300 realisiert, welches in Fig. 32a vergrößert in Einzeldarstellung gezeigt ist. Das Prinzip dieses Tapetenausgleichs besteht dabei darin, dass das Ausgleichselement 300 vorteilhafterweise in jedem vorliegenden Einbaufall selbsttätig den gemäß der zweiten Ausführung des Tapetenausgleichs vorliegenden Raum, der den Leerhub LH der Betätigungselemente 3a, 3b bestimmt, ausfüllt.

Wie dabei zunächst Fig. 31 bis 34 zeigen, ist das Ausgleichselement 300 vorteilhafterweise Bestandteil eines Verbindungsteils 14a. Letzteres ist ähnlich aufgebaut wie das in Fig. 6 bis 9 dargestellte Verbindungsteil 14a und daher nicht mit einem eigenen Bezugszeichen bezeichnet. Es kann anstelle des Verbindungsteils 14a gemäß Fig. 6 bis 9 mit einem Abdeckteil 1 gemäß der zweiten Ausführung der Erfindung kombiniert werden. Es sind daher zwei Ausgleichselemente 300 - für jedes Betätigungselement 3a, 3b eines - vorgesehen. An den Unterseiten 9a, 9b der Betätigungselemente 3a, 3b brauchen dabei keine Vorsprünge 8a, 8b vorgesehen werden, da deren Funktion von den Ausgleichselementen 300 übernommen wird.

Jedes Ausgleichselement 300 ist über einen Verbindungssteg 310, der senkrecht von einem Randsteg 18a des Verbindungsteils 14a absteht, an einem Randsteg 18a des Verbindungsteils 14a befestigt, welcher im Montagezustand auf der Seite des freien Endes des jeweiligen Betätigungselementes 3a, 3b unter dem Rahmenkörper 2 liegt.

Das Ausgleichselement 300 besteht aus einem ersten, keilförmig ausgebildeten Abschnitt 320, der als Füllabschnitt für den Raum des Leerhubs LH angesehen werden kann, und aus einem mit dem ersten Abschnitt 320 verbundenen zweiten Abschnitt 330, der wegen seiner Funktion, das Ausgleichselement zu bewegen, als Antriebsabschnitt bezeichnet werden kann.

Der keilförmige erste Abschnitt 320 weist jeweils eine ebene Anlagefläche 32 für die Unterseiten 9a, 9b der Betätigungselemente 3a, 3b und eine Schrägfläche 33 zur Anlage an der erfindungsgemäßen Installationsvorrichtung 20, insbesondere an deren Tastschalter, auf. Wie in Fig. 32 und 32a gezeigt, muss der Abschnitt 320 nicht als Vollkörper ausgeführt werden, sondern kann in Richtung auf die Installationsvorrichtung 20 hin offen sein.

In dem zweiten Abschnitt 330 befinden sich - wie am besten Fig. 32a zu entnehmen und nur dort mit allen jeweiligen Bezugszeichen im Detail bezeichnet ist - am Ende eines mittig angeordneten Vorschubstücks 34 zwei bogenförmige Spreizarme 35a, 35b, die jeweils über Filmgelenke 36a, 36b an dem Vorschubstück 34 angelenkt sind. Die Gelenke 36a, 36b sind derart federnd ausgebildet, dass sie die Spreizarme 35a, 35b, wenn kein Druck auf sie ausgeübt wird, maximal auseinander spreizen, wie dies Fig. 32, 32a und 33 zeigen. Einer der Spreizarme 35a weist ein freies Ende auf, während der andere Spreizarm 35b über ein weiteres Filmgelenk 37 an dem Verbindungssteg 310 angelenkt ist. Dieses weitere Gelenk 37 ist derart federnd ausgebildet, dass es den Spreizarm 35b im druckunbelasteten Zustand maximal von dem Verbindungssteg 310 abspreizt.

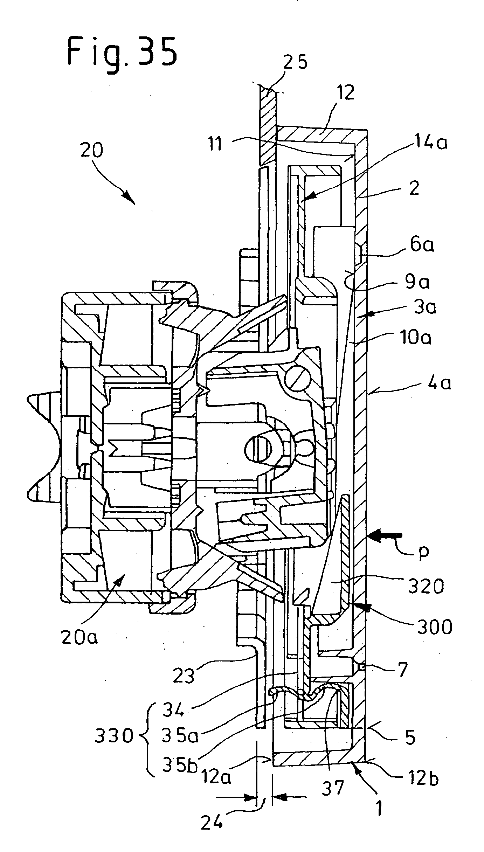

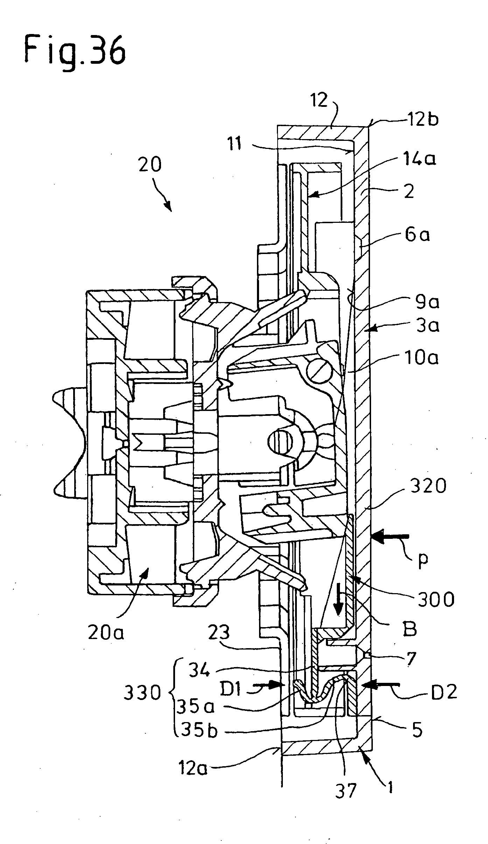

Die Wirkungsweise des Ausgleichselements 300 geht aus Fig. 35 und 36 hervor. Fig. 35 zeigt dabei wiederum (in Analogie zu Fig. 30) einen Montagefall, wie er in Fig. 17 dargestellt ist, wo durch das Vorhandensein von Tapete 25 ein Zwischenraum 24 zwischen der Unterkante 12a des umlaufenden Randstegs 12 des Abdeckteils 1 und der Wand 21 vorhanden ist. Fig. 36 zeigt (in Analogie zu Fig. 29) einen Montagefall, wie er in Fig. 15 dargestellt ist, in dem ein Zwischenraum 24 zwischen der Unterkante 12a des umlaufenden Randstegs 12 des Abdeckteils 1 und der Wand 21 nicht vorhanden ist bzw. den Wert Null annimmt.

Im ersten Fall sind die Spreizarme 35a, 35b aufgespreizt, im zweiten Fall maximal zusammengedrückt, wobei der entsprechende Druck - symbolisiert durch die in Fig. 36 mit D1 und D2 bezeichneten Pfeile - dadurch zustande kommt, dass das Verbindungsteil 14a zwischen dem Rahmenkörper 2 und dem Tragring 23 verklemmt ist, wobei sich das freie Ende des einen Spreizarms 35a auf dem Tragring 23 abstützt.

Im ersten Fall befindet sich der keilförmige erste Abschnitt 320 des Ausgleichselements 300 unter dem Betätigungselement 3a und füllt den Freiraum zwischen Betätigungselement 3a und Schalter, der bei der zweiten Ausführung des Tapetenausgleichs den Leerhub LH bedingt, aus.

Eine Veränderung der Spreizung der Spreizarme 35a, 35b - charakterisiert durch die Winkellage gegenüber dem mittig angeordneten Vorschubstück 34 - bewirkt dabei, dass der als Antriebsabschnitt bezeichnete zweite Abschnitt 330 und damit auch der über das Vorschubstück 34 verbundene erste Abschnitt 320 parallel zur Oberseite 4a des Betätigungselementes 3a lateral verschoben werden. Bei einem Zusammendrücken der Spreizarme 35a, 35b läuft diese Bewegung nach außen, also in Richtung auf den Randsteg 12 des Rahmenteils 2 hin ab, wie dies durch den in Fig. 36 mit dem Bezugszeichen B bezeichneten Pfeil angezeigt wird. Bei einem Aufspreizen erfolgt diese Bewegung selbstttätig unter der Wirkung der Federgelenke 36a, 36b, 37 in umgekehrter Richtung, also nach innen. Der keilförmige erste Abschnitt 320 sichert bei dieser Bewegung durch die Wirkung seiner Schrägfläche 33, dass der jeweils vorliegende Abstand zwischen den Unterseiten 9a, 9b der Betätigungselemente 3a, 3b und der Oberseite der Installationsvorrichtung 20 überbrückt wird. Für eine akkurate Funktionserfüllung des Ausgleichelementes 300 muss dazu der Neigungswinkel p der Schrägfläche 33 auf das Maß abgestimmt sein, in dem sich die Spreizarme 35a, 35b aus ihrer vollständig zusammengedrückten Position (Fig. 36) maximal aufspreizen lassen. Dadurch kann mit Vorteil auch ein Größenbereich für den Tapetenausgleich festgelegt werden.

Die Erfindung ist nicht auf die beschriebenen Ausführungsbeispiele beschränkt, sondern umfasst auch alle im Sinne der Erfindung gleichwirkenden Ausführungen, wie dies bereits aus der vorstehenden Beschreibung hervorgeht. So könnte ein erfindungsgemäßes Abdeckteil - im Gegensatz zu den dargestellten Beispielen auch mit einem Rahmenkörper 2 mit runder Außenkontur und/oder mit Betätigungselementen 3, 3a, 3b mit runder Außenkontur ausgeführt werden, ohne dass der Rahmen der Erfindung verlassen wird. Auch ist ein Einsatz des erfindungsgemäßen Abdeckteils 1 in einer im Aufputz montierbaren elektrischen Installationsverbindung möglich.

Weiterhin kann der Fachmann zusätzliche technische Maßnahmen vorsehen, durch die die Erfindung in zweckmäßiger Weise ausgestaltet wird. So können z. B. in den Oberseiten 4, 4a, 4b der Betätigungselemente 9, 9a, 9b - mittig oder randseitig im Bereich des Schlitzes 7 - als Fenster für im Installationsgerät 20 - beispielsweise zur Kontrolle des Schaltzustandes - vorhandene Leuchtmittel Aussparungen vorgesehen sein.

### Bezugszeichenliste

- 1: Abdeckteil
- 2: Rahmenkörper von 1
- 3: Betätigungselement - Fig. 1
- 3a: Betätigungselement - Fig. 5-14, 20-23, 29-30b, 35, 36
- 3b: Betätigungselement - Fig. 5-14, 20-23
- 4: Oberseite von 3
- 4a: Oberseite von 3a
- 4b: Oberseite von 3b
- 5: Deckfläche von 2
- 6: Gelenk zwischen 2 und 3
- 6a: Gelenk zwischen 2 und 3a
- 6b: Gelenk zwischen 2 und 3b
- 7: Schlitz
- 8: Vorsprung an 3 auf 9
- 8a: Vorsprung an 3a auf 9a
- 8b: Vorsprung an 3b auf 9b
- 9: Unterseite von 3
- 9a: Unterseite von 3a
- 9b: Unterseite von 3b
- 10: Randsteg an 9
- 10a: Randsteg an 9a
- 10b: Randsteg an 9b
- 11: Unterseite von 2
- 12: Randsteg an 11
- 12a: Unterkante von 12
- 12b: Kante an 2
- 13: Befestigungslement an 11
- 14a: Verbindungsteil - Fig. 6-9, 29-36
- 14b: Verbindungsteil - Fig. 11-13
- 15a: Verbindungselement von 15a
- 15b: Verbindungselement von 15b
- 16a: Klemmnocken von 14a
- 16b: Feder von 14b
- 17a: Basisplatte von 14a
- 17b: Basisplatte von 14b
- 18a: Randsteg um 17a
- 18b: Randsteg um 17b
- 19: zusätzliche Struktur in 2
- 20: Installationsvorrichtung (Schalter) - Fig. 15-19, 29-30b, 35, 36
- 20a: Sockelteil von 20
- 21: Wand - Fig. 15-19
- 22: Dose - Fig. 15-19
- 23: Tragring - Fig. 15-19, 29-30b, 35, 36
- 24: Zwischenraum zwischen 12a und 21
- 25: Tapete
- 26: Abstand zwischen 1 und 23 - Fig. 15-19
- 27: Blendrahmen - Fig. 20-22, 24-27
- 28: Rahmenabschnitt von 27
- 29: Kompensationsabschnitt von 27
- 29a: Kompensationselement von 29
- 30a: Gelenk von 29 an 28 (unten)
- 30b: Gelenk von 29 (Seite)
- 30c: Gelenk von 29 (oben)
- 30d: Gelenk von 29 (Seite)
- 31: Befestigungselement für 27 in 2
- 32: Anlagefläche von 320 für 9, 9a, 9b
- 33: Schrägfläche zur Anlage an 20
- 34: Vorschubstück von 330
- 35a: Spreizarm von 330 zur Anlage an 23
- 35b: Spreizarm von 330 an 31
- 36a: Filmgelenk 35a/34
- 36b: Filmgelenk 35b/34
- 37: Filmgelenk 35b/31

- 100: Sockelabschnitt von 16a
- 110: Klemmabschnitt von 16a
- 111: erster Klemmschenkel von 110
- 112: zweiter Klemmschenkel von 110
- 113: Einführschräge an 111
- 200: Randsteg an 23
- 300: Ausgleichselement
- 310: Verbindungssteg für 300
- 320: erster Absch n itt von 300
- 330: zweiter Abschnitt von 300

- A1: Anlage von 111 an 200
- A2: Anlage von 112 an 200
- AP: Anlagepunkt von 8a auf 20 - Fig. 29
- B: Bewegungsrichtung von 300 - Fig. 36
- D1: Druckwirkung von 23 auf 300
- D2: Druckwirkung von 2 auf 300
- H: Abstand zwischen 30c und 30a
- LH: Leerhub - Fig. 30
- p: Betätigungsdruck auf 4, 4a, 4b für 3, 3a, 3b

## Patentansprüche

1. Abdeckteil (1), insbesondere Abdeckrahmen,
- für das Sockelteil (20a) mindestens einer elektrischen Installationsvorrichtung (20), insbesondere zur Unterputzmontage, welche einen Tastschalter aufweist, durch den über ein Betätigungselement (3, 3a, 3b), das unter einem Betätigungsdruck (p) auf seine Oberseite (4, 4a, 4b) einen Betätigungsweg aus einer Ruheposition in eine Schaltposition zurücklegt, ein Schaltvorgang ausgelöst wird,
- mit einem Rahmenkörper (2), der eine Deckfläche (5) aufweist und das Betätigungselement (3, 3a, 3b) randseitig umgibt, wobei der Rahmenkörper (2) mit dem Betätigungselement (3, 3a, 3b) über ein Gelenk (6, 6a, 6b) verbunden ist,
**dadurch gekennzeichnet, dass** das Betätigungselement (3, 3a, 3b) und der Rahmenkörper (2) einstückig ausgebildet sind.

2. Abdeckteil (1) nach Anspruch 1,
**dadurch gekennzeichnet, dass** die Oberseite (4, 4a, 4b) des Betätigungselementes (3, 3a, 3b) als ebene Fläche ausgebildet ist, die, wenn sich das Betätigungselement (3, 3a, 3b) in seiner Ruheposition befindet, mit der Deckfläche (5) des Rahmenkörpers (2) fluchtet.

3. Abdeckteil (1) nach Anspruch 1 oder 2,
**dadurch gekennzeichnet, dass** das Betätigungselement (3, 3a, 3b) und der Rahmenkörper (2) aus einem Kunststoffmaterial bestehen.

4. Abdeckteil (1) nach einem der Ansprüche 1 bis 3,
**dadurch gekennzeichnet, dass** das Gelenk (6), über welches das Betätigungselement (3, 3a, 3b) und der Rahmenkörper (2) miteinander verbunden sind, derart federnd ausgebildet oder dass das Betätigungselement (3, 3a, 3b) derart federnd beaufschlagt ist, dass das Betätigungselement (3, 3a, 3b) nach Wegfall des Betätigungsdruckes (p) aus seiner Schaltposition in die Ruheposition zurückkehrt, wobei das Gelenk (6, 6a, 6b), über welches das Betätigungselement (3, 3a, 3b) und der Rahmenkörper (2) miteinander verbunden sind, vorzugsweise ein Filmgelenk ist.

5. Abdeckteil (1) nach einem der Ansprüche 1 bis 4,
**dadurch gekennzeichnet, dass** das Betätigungselement (3, 3a, 3b) aus dem Rahmenkörper (2) freigespart ist, wobei sich zwischen dem Betätigungselement (3, 3a, 3b) und dem Rahmenkörper (2) ein Schlitz (7) befindet.

6. Abdeckteil (1) nach einem der Ansprüche 1 bis 5,
**dadurch gekennzeichnet, dass** das Betätigungselement (3, 3a, 3b) auf seiner Unterseite (9, 9a, 9b) mindestens einen Vorsprung (8, 8a, 8b), wie einen Schaltnocken, aufweist, der in der Schaltposition des Betätigungselementes (3, 3a, 3b) in dem Tastschalter den Schaltvorgang auslöst.

7. Abdeckteil (1) nach einem der Ansprüche 1 bis 6,
**dadurch gekennzeichnet, dass** der Rahmenkörper (2) auf seiner Unterseite (11) Befestigungselemente (13) zur form-, kraft- und/oder stoffschlüssigen Verbindung mit korrespondierenden Verbindungselementen (15a, 15b) eines zur Befestigung an einer elektrischen Installationsvorrichtung (20) dienenden Verbindungsteils (14a, 14b), insbesondere eines Klemmteils, aufweist, wobei der Rahmenkörper (2) und das Verbindungsteil (14a, 14b) vorzugsweise eine vormontierte Baueinheit bilden.

8. Abdeckteil (1) nach Anspruch 7,
**dadurch gekennzeichnet, dass** das Verbindungsteil (14a) zur insbesondere kraft- und formschlüssigen Verbindung mit der elektrischen Installationsvorrichtung (20) Verbindungselemente (16a, 16b), wie Klemmnocken (16a) oder Federn (16b), aufweist.

9. Abdeckteil (1) nach Anspruch 7 oder 8,
**dadurch gekennzeichnet, dass** das Verbindungsteil (14a, 14b), insbesondere die vormontierte Baueinheit aus Rahmenkörper (2) und Verbindungsteil (14a, 14b) für einen Tapetenausgleich, d. h. zur Schließung eines Zwischenraums (24) zwischen dem Rahmenkörper (2) und einer/der Wand (21) oder einer/der Tapete (25), unterschiedlich tief in die elektrische Installationsvorrichtung (20) einsteckbar und dort fixierbar ist.

10. Abdeckteil (1) nach Anspruch 9,
**dadurch gekennzeichnet, dass** zum unterschiedlich tiefen Einstecken und Fixieren des Verbindungsteils (14a) in die/der elektrische(n) Installationsvorrichtung (20), das Verbindungsteil (14a) Klemmnocken (16a) aufweist, die ihrerseits einen stegartigen Sockelabschnitt (100) aufweisen, mittels dessen sie am Klemmteil (14a) gehalten sind, wobei auf diesem Sockelabschnitt (100) ein - im Querschnitt gesehen - sich V-förmig aufweitender Klemmabschnitt (110) mit einem ersten Klemmschenkel (111) und einem zweiten Klemmschenkel (112) sitzt, wobei die Klemmschenkel (111, 112) elastisch rückfedernd gegeneinander drückbar sind.

11. Abdeckteil (1) nach Anspruch 9 oder 10,
**dadurch gekennzeichnet, dass** zur Schließung des Zwischenraums (24) zwischen dem Rahmenkörper (2) und einer/der Wand (21) oder einer/der Tapete (25) ein Blendrahmen (27) mit dem Rahmenkörper (2) verbunden ist, wobei der Blendrahmen (27) unter Federwirkung in unterschiedlichem Maß aus dem Rahmenkörper (2) heraustreten kann und bevorzugt, insbesondere über im Kompensationsabschnitt (29) angeordnete Befestigungselemente (31), in den Rahmen körper (2) einclipsbar ist.

12. Abdeckteil (1) nach Anspruch 11,
**dadurch gekennzeichnet, dass** der Blendrahmen (27) aus einen Rahmenabschnitt (28) und einem Kompensationsabschnitt (29) besteht, wobei der Rahmenabschnitt (28) durch eine umlaufende Rahmenstruktur gebildet ist, welche formangepasst innerhalb des Rahmenkörpers (2) angeordnet ist, und wobei der Kompensationsabschnitt (29) aus diskreten federelastisch ausgebildeten Kompensationselementen (29a) besteht, die an dem Rahmenabschnitt (28) befestigt oder bevorzugt einstückig mit diesem ausgebildet sind, wobei die Kompensationselemente (29a) vorzugsweise nach der Art eines Rhombus ausgebildet sind und in den Rhombusecken federelastische Gelenke (30a, 30b, 30c, 30d) aufweisen.

13. Abdeckteil (1) nach Anspruch 9 oder 10,
**dadurch gekennzeichnet, dass** insbesondere am Verbindungsteil (14a) ein Ausgleichselement (300) angeordnet ist, welches selbsttätig unterschiedlich große Räume (LH), die sich durch das unterschiedlich tiefe Einstecken und Fixieren des Verbindungsteils (14a) in die/der elektrische(n) Installationsvorrichtung (20) zwischen der elektrischen Installationsvorrichtung (20) und dem Betätigungselement (3, 3a, 3b) ausbilden, ausfüllt.

14. Abdeckteil (1) nach Anspruch 13,
**dadurch gekennzeichnet, dass** das Ausgleichselement (300) aus einem ersten, insbesondere keilförmig ausgebildeten Abschnitt (320) und einem zweiten Abschnitt (330) besteht, wobei der erste Abschnitt (320) jeweils die Räume (LH), die sich zwischen der elektrischen Installationsvorrichtung (20) und dem Betätigungselement (3, 3a, 3b) ausbilden, ausfüllt und wobei mittels des zweiten Abschnitts (330) das Ausgleichselement (300) in diesen Räume (LH) bewegbar ist, wobei insbesondere der erste Abschnitt (320) parallel zur Oberseite (4, 4a, 4b) des Betätigungselementes (3, 3a, 3b) lateral verschoben wird.

15. Abdeckteil (1) nach Anspruch 13 oder 14,
**dadurch gekennzeichnet, dass** der zweite Abschnitt (330) des Ausgleichselements (300) aus einem insbesondere mittig angeordneten Vorschubstück (34) besteht, an dem jeweils über Filmgelenke (36a, 36b) zwei insbesondere bogenförmige, gegeneinander drückbare Spreizarme (35a, 35b) angelenkt sind, wobei die Gelenke (36a, 36b) derart federnd ausgebildet sind, dass sie die Spreizarme (35a, 35b), wenn kein Druck auf sie ausgeübt wird, maximal auseinander spreizen.

16. Abdeckteil (1) nach Anspruch 15,
**dadurch gekennzeichnet, dass** einer der Spreizarme (35a) ein freies Ende aufweist, während der andere Spreizarm (35b) über ein weiteres Filmgelenk (37) an einem Verbindungssteg (310) des Verbindungsstücks (14a) angelenkt ist, wobei das weitere Gelenk (37) derart federnd ausgebildet ist, dass es den Spreizarm (35b) im druckunbelasteten Zustand maximal von dem Verbindungssteg (310) abspreizt.

17. Baueinheit aus einem Abdeckteil (1) nach einem der Ansprüche 1 bis 16 und einem Verbindungsteil (14a, 14b), insbesondere einem Klemmteil, wobei das Verbindungsteil (14a, 14b) über Verbindungselemente (15a, 15b) form-, kraft- und/oder stoffschlüssig mit korrespondierenden Befestigungselementen (13) des Abdeckteils (1) verbunden ist und zur kraft- und formschlüssigen Verbindung mit dem Sockelteil (20a) einer elektrischen Installationsvorrichtung (20) Verbindungselemente (16a, 16b), wie Klemmnocken (16a) oder Federn (16b), aufweist.

18. Baueinheit nach Anspruch 17,
**gekennzeichnet durch** ein Verbindungsteil (14a, 14b) mit den Merkmalen des kennzeichnenden Teils eines der Ansprüche 9, 10 oder 13 bis 16.

19. Elektrische Installationsvorrichtung (20), insbesondere zur Unterputzmontage, welche in einem Sockelteil (20a) einen Tastschalter aufweist, durch den über ein Betätigungselement (3, 3a, 3b), das unter einem Betätigungsdruck (p) auf seine Oberseite (4, 4a, 4b) einen Betätigungsweg aus einer Ruheposition in eine Schaltposition zurücklegt, ein Schaltvorgang ausgelöst wird, und welche ein Abdeckteil (1) mit einem eine Deckfläche (5) aufweisenden Rahmenkörper (2) umfasst, der das Betätigungselement (3, 3a, 3b) randseitig umgibt, wobei der Rahmenkörper (2) an einer Seite mit dem Betätigungselement (3, 3a, 3b) über ein Gelenk (6, 6a, 6b) verbunden ist,
**dadurch gekennzeichnet, dass** das Betätigungselement (3, 3a, 3b) und der Rahmenkörper (2) einstückig ausgebildet sind.

20. Elektrische Installationsvorrichtung (20) nach Anspruch 19, mit einem Abdeckteil (1) nach einem der Ansprüche 1 bis 16 und/oder mit einer Baueinheit nach Anspruch 17 oder 18.

## Claims

1. Covering part (1), in particular covering frame,
- for the base part (20a) of at least one electrical installation device (20), in particular for flush mounting, which device has a momentary-contact switch, by means of which a switching operation is triggered via an actuating element (3, 3a, 3b) which, under an actuating pressure (p) on its top side (4, 4a, 4b), travels an actuating distance from a rest position to a switching position,
- having a frame body (2) which has a top surface (5) and surrounds the actuating element (3, 3a, 3b) at the border thereof,
the frame body (2) being connected to the actuating element (3, 3a, 3b) via a joint (6, 6a, 6b),
**characterized in that** the actuating element (3, 3a, 3b) and the frame body (2) are integrally formed.

2. Covering part (1) according to claim 1,
**characterized in that** the top side (4, 4a, 4b) of the actuating element (3, 3a, 3b) is formed as a flat surface which, when the actuating element (3, 3a, 3b) is in its rest position, is flush with the top surface (5) of the frame body (2).

3. Covering part (1) according to claim 1 or 2,
**characterized in that** the actuating element (3, 3a, 3b) and the frame body (2) consist of a plastics material.

4. Covering part (1) according to one of claims 1 to 3,
**characterized in that** the joint (6), via which the actuating element (3, 3a, 3b) and the frame body (2) are connected to one another, is formed in such a resilient manner, or **in that** the actuating element (3, 3a, 3b) is biased in such a resilient manner, that the actuating element (3, 3a, 3b) after removal of the actuating pressure (p) returns from its switching position to the rest position, the joint (6, 6a, 6b), via which the actuating element (3, 3a, 3b) and the frame body (2) are connected to one another, preferably being a film hinge.

5. Covering part (1) according to one of claims 1 to 4,
**characterized in that** the actuating element (3, 3a, 3b) is cut free from the frame body (2), a slot (7) being located between the actuating element (3, 3a, 3b) and the frame body (2).

6. Covering part (1) according to one of claims 1 to 5,
**characterized in that** the actuating element (3, 3a, 3b) on its bottom side (9, 9a, 9b) has at least one projection (8, 8a, 8b), such as a switching cam, which in the switching position of the actuating element (3, 3a, 3b) triggers the switching operation in the momentary-contact switch.

7. Covering part (1) according to one of claims 1 to 6,
**characterized in that** the frame body (2) has on its bottom side (11) fastening elements (13) for form-locked, force-locked and/or material-locked connection to corresponding connecting elements (15a, 15b) of a connecting part (14a, 14b), in particular a clamping part, serving for fastening to an electrical installation device (20), the frame body (2) and the connecting part (14a, 14b) preferably forming a preassembled unit.

8. Covering part (1) according to claim 7,
**characterized in that** the connecting part (14a) has connecting elements (16a, 16b), such as clamping lugs (16a) or springs (16b), for in particular force-locked and form-locked connection to the electrical installation device (20).

9. Covering part (1) according to claim 7 or 8,
**characterized in that** the connecting part (14a, 14b), in particular the preassembled unit of frame body (2) and connecting part (14a, 14b), is insertable to different depths into the electrical installation device (20) and fixable there for a wallpaper compensation, i.e. for closing a gap (24) between the frame body (2) and a/the wall (21) or a/the wallpaper (25).

10. Covering part (1) according to claim 9,
**characterized in that**, for the different depths of insertion and fixing of the connecting part (14a) into/in the electrical installation device (20), the connecting part (14a) has clamping lugs (16a), which in turn have a web-like base section (100), by means of which they are held on the clamping part (14a), a clamping section (110), which widens in a V-shape seen in cross-section and has a first clamping arm (111) and a second clamping arm (112), being seated on this base section (100), the clamping arms (111, 112) being able to be elastically resiliently pushed towards one another.

11. Covering part (1) according to claim 9 or 10,
**characterized in that**, for closing the gap (24) between the frame body (2) and a/the wall (21) or a/the wallpaper (25), a masking frame (27) is connected to the frame body (2), the masking frame (27) under spring action being able to protrude to varying degrees from the frame body (2), and preferably being able to be clipped into the frame body (2), in particular via fastening elements (31) arranged in the compensating section (29).

12. Covering part (1) according to claim 11,
**characterized in that** the masking frame (27) consists of a frame section (28) and a compensating section (29), the frame section (28) being formed by a peripheral frame structure, which is arranged inside the frame body (2) in a manner adapted in shape thereto, and the compensating section (29) consisting of discrete resiliently formed compensating elements (29a) which are fastened to the frame section (28) or preferably formed integrally therewith, the compensating elements (29a) being preferably formed in the manner of a rhombus and having resilient joints (30a, 30b, 30c, 30d) at the rhombus corners.

13. Covering part (1) according to claim 9 or 10,
**characterized in that**, in particular on the connecting part (14a), there is arranged a compensation element (300) which automatically fills spaces (LH) of different size which are formed between the electrical installation device (20) and the actuating element (3, 3a, 3b) by the different depths of insertion and fixing of the connecting part (14a) into/in the electrical installation device (20).

14. Covering part (1) according to claim 13,
**characterized in that** the compensation element (300) consists of a first, in particular wedge-shaped, section (320) and a second section (330), the first section (320) in each case filling the spaces (LH) formed between the electrical installation device (20) and the actuating element (3, 3a, 3b), and by means of the second section (330) the compensation element (300) being movable in these spaces (LH), in particular the first section (320) being displaced laterally parallel to the top side (4, 4a, 4b) of the actuating element (3, 3a, 3b).

15. Covering part (1) according to claim 13 or 14,
**characterized in that** the second section (330) of the compensation element (300) consists of a, in particular centrally arranged, advancing piece (34) on which there are articulated in each case via film hinges (36a, 36b) two, in particular arcuate, spreading arms (35a, 35b) pushable towards one another, the hinges (36a, 36b) being formed in such a resilient manner that they spread apart to the maximum the spreading arms (35a, 35b) when no pressure is exerted on them.

16. Covering part (1) according to claim 15,
**characterized in that** one of the spreading arms (35a) has a free end, whereas the other spreading arm (35b) is articulated via a further film hinge (37) on a connecting web (310) of the connecting piece (14a), the further hinge (37) being formed in such a resilient manner that it spreads the spreading arm (35b) in the pressure-unloaded state to the maximum from the connecting web (310).

17. Unit formed of a covering part (1) according to one of claims 1 to 16 and a connecting part (14a, 14b), in particular a clamping part, the connecting part (14a, 14b) being connected via connecting elements (15a, 15b) in a form-locked, force-locked and/or material-locked manner to corresponding fastening elements (13) of the covering part (1) and having connecting elements (16a, 16b), such as clamping lugs (16a) or springs (16b), for force-locked and form-locked connection to the base part (20a) of an electrical installation device (20).

18. Unit according to claim 17,
**characterized by** a connecting part (14a, 14b) having the features of the characterizing part of one of claims 9, 10 or 13 to 16.

19. Electrical installation device (20), in particular for flush mounting, which device has in a base part (20a) a momentary-contact switch, by means of which a switching operation is triggered via an actuating element (3, 3a, 3b) which, under an actuating pressure (p) on its top side (4, 4a, 4b), travels an actuating distance from a rest position to a switching position, and which device comprises a covering part (1) having a frame body (2) with a top surface (5), which body surrounds the actuating element (3, 3a, 3b) at the boundary thereof, the frame body (2) being connected at one side to the actuating element (3, 3a, 3b) via a joint (6, 6a, 6b),
**characterized in that** the actuating element (3, 3a, 3b) and the frame body (2) are integrally formed.

20. Electrical installation device (20) according to claim 19, having a covering part (1) according to one of claims 1 to 16 and/or a unit according to claim 17 or 18.

## Revendications

1. Elément de recouvrement (1), en particulier couvercle de recouvrement,
- pour la partie de socle (20a) d'au moins un dispositif d'installation (20) électrique, en particulier destiné à être monté de manière encastrée, lequel présente un commutateur à touche qui permet de déclencher un processus de commutation par l'intermédiaire d'un élément d'actionnement (3, 3a, 3b), qui parcourt une course d'actionnement depuis une position de repos jusqu'à une position de commutation sous l'action d'une pression d'actionnement (p) exercée sur le côté supérieur (4, 4a, 4b) de l'élément d'actionnement,
- comprenant un corps de cadre (2) qui présente une surface de recouvrement (5) et entoure l'élément d'actionnement (3a, 3a, 3b) au niveau de la bordure, dans lequel
le corps de cadre (2) est relié à l'élément d'actionnement (3, 3a, 3b) par l'intermédiaire d'une articulation (6, 6a, 6b),
**caractérisé en ce que** l'élément d'actionnement (3, 3a, 3b) et le corps de cadre (2) sont réalisés d'un seul tenant.

2. Elément de recouvrement (1) selon la revendication 1,
**caractérisé en ce que** le côté supérieur (4, 4a, 4b) de l'élément d'actionnement (3, 3a, 3b) est réalisé sous la forme d'une surface plane, qui, lorsque l'élément d'actionnement (3, 3a, 3b) se trouve dans sa position de repos, est alignée avec la surface de recouvrement (5) du corps de cadre (2).

3. Elément de recouvrement (1) selon la revendication 1 ou 2,
**caractérisé en ce que** l'élément d'actionnement (3, 3a, 3b) et le corps de cadre (2) sont constitués d'un matériau en matière plastique.

4. Elément de recouvrement (1) selon l'une quelconque des revendications 1 à 3,
**caractérisé en ce que** l'articulation (6), par l'intermédiaire de laquelle l'élément d'actionnement (3, 3a, 3b) et le corps de cadre (2) sont reliés l'un à l'autre, est réalisée de manière élastique de telle manière, ou **en ce que** l'élément d'actionnement (3, 3a, 3b) est sollicité de manière élastique de telle manière que l'élément d'actionnement (3, 3a, 3b) retourne depuis sa position de commutation jusqu'à sa position de repos à l'arrêt de la pression d'actionnement (p), dans lequel l'articulation (6, 6a, 6b), par l'intermédiaire de laquelle l'élément d'actionnement (3, 3a, 3b) et le corps de cadre (2) sont reliés l'un à 'autre, est de préférence une articulation en film.

5. Elément de recouvrement (1) selon l'une quelconque des revendications 1 à 4,
**caractérisé en ce que** l'élément d'actionnement (3, 3a, 3b) est dégagé du corps de cadre (2), dans lequel une entaille (7) se trouve entre l'élément d'actionnement (3, 3a, 3b) et le corps de cadre (2).

6. Elément de recouvrement (1) selon l'une quelconque des revendications 1 à 5,
**caractérisé en ce que** l'élément d'actionnement (3, 3a, 3b) présente, sur son côté inférieur (9, 9a, 9b) au moins une partie saillante (8, 8a, 8b), telle qu'une came de commutation, qui déclenche le processus de commutation dans le commutateur à touche dans la position de commutation de l'élément d'actionnement (3, 3 a, 3b).

7. Elément de recouvrement (1) selon l'une quelconque des revendications 1 à 6,
**caractérisé en ce que** le corps de cadre (2) présente, sur son côté inférieur (11), des éléments de fixation (13) destinés à être reliés par complémentarité de forme, à force et/ou par liaison de matière à des éléments d'assemblage (15a, 15b) correspondants d'une partie d'assemblage (14a, 14b) servant à la fixation au niveau d'un dispositif d'installation (20) électrique, en particulier d'une partie de serrage, dans lequel le corps de cadre (2) et la partie d'assemblage (14a, 14b) forment de préférence une unité modulaire prémontée.

8. Elément de recouvrement (1) selon la revendication 7,
**caractérisé en ce que** la partie d'assemblage (14a) destinée à être en particulier reliée à force et par complémentarité de forme au dispositif d'installation (20) électrique présente des éléments d'assemblage (16a, 16b), tels que des cames de serrage (16a) ou des ressorts (16b).

9. Elément de recouvrement (1) selon la revendication 7 ou 8,
**caractérisé en ce que** la partie d'assemblage (14a, 14b), en particulier l'unité modulaire prémontée constituée du corps de cadre (2) et de l'élément d'assemblage (14a, 14b) pour une compensation de papier peint, c'est-à-dire pour fermer un espace intermédiaire (24) entre le corps de cadre (2) et un/le mur (21) ou un/le papier peint (25), peut être insérée à diverses profondeurs dans le dispositif d'installation (20) électrique et y être fixée.

10. Elément de recouvrement (1) selon la revendication 9,
**caractérisé en ce qu'**aux fins de l'insertion et de la fixation de la partie d'assemblage (14a) à diverses profondeurs dans le dispositif d'installation (20) électrique, la partie d'assemblage (14a) présente des cames de serrage (16a), qui présentent pour leur part une section socle (100) de type entretoise, au moyen de laquelle elles sont maintenues au niveau de la partie de serrage (14a), dans lequel une section de serrage (110) s'élargissant de manière à présenter une forme de V - vu dans la section transversale - dotée d'une première branche de serrage (111) et d'une deuxième branche de serrage (112) repose sur ladite section socle (100), les branches de serrage (111, 112) pouvant être pressées élastiquement l'une contre l'autre avec un effet ressort.

11. Elément de recouvrement (1) selon la revendication 9 ou 10,
**caractérisé en ce que** pour fermer l'espace intermédiaire (24) entre le corps de cadre (2) et un/le mur (21) ou un/le papier peint (25), un cadre dormant (27) est relié au corps de cadre (2), dans lequel le cadre dormant (27) peut sortir du corps de cadre (2) sous l'action d'un ressort à des degrés différents et de préférence peut être clipsé dans le corps de cadre (2) en particulier par l'intermédiaire d'éléments de fixation (31) disposés dans la section de compensation (29).

12. Elément de recouvrement (1) selon la revendication 11,
**caractérisé en ce que** le cadre dormant (27) est constitué d'une section de cadre (28) et d'une section de compensation (29), dans lequel la section de cadre (28) est formée par une structure de cadre périphérique, dont la forme est adaptée pour pouvoir être disposée à l'intérieur du corps de cadre (2), et dans lequel la section de compensation (29) est constituée d'éléments de compensation (29a) discrets réalisés de manière élastique, lesquels sont fixés au niveau de la section de cadre (28) ou de préférence sont réalisés d'un seul tenant avec la section de cadre, dans lequel les éléments de compensation (29a) sont réalisés de préférence sous la forme d'un losange et présentent dans les angles de losange des articulations (30a, 30b, 30c, 30d) élastiques.

13. Elément de recouvrement (1) selon la revendication 9 ou 10,
**caractérisé en ce qu'**un élément de compensation (300) est disposé en particulier au niveau de la partie d'assemblage (14a), lequel remplit, de manière autonome et de manière diverse, de grands espaces (LH) qui se forment entre le dispositif d'installation (20) électrique et l'élément d'actionnement (3, 3a, 3b) du fait des diverses profondeurs d'insertion et de la fixation de la partie d'assemblage (14a) dans le dispositif d'installation (20) électrique.

14. Elément de recouvrement (1) selon la revendication 13,
**caractérisé en ce que** l'élément de compensation (300) est constitué d'une première section (320) réalisée en particulier de manière à présenter une forme conique et d'une deuxième section (330), dans lequel la première section (320) remplit respectivement les espaces (LH) qui se forment entre le dispositif d'installation (20) électrique et l'élément d'actionnement (3, 3a, 3b) et dans lequel l'élément de compensation (300) peut être déplacé au moyen de la deuxième section (330) dans ces espaces (LH), dans lequel en particulier la première section (320) est glissée latéralement de manière parallèle par rapport au côté supérieur (4, 4a, 4b) de l'élément d'actionnement (3, 3a, 3b).

15. Elément de recouvrement (1) selon la revendication 13 ou 14,
**caractérisé en ce que** la deuxième section (330) de l'élément de compensation (300) est constituée d'une pièce d'avancée (34) disposée en particulier au centre, au niveau de laquelle sont articulés, respectivement par l'intermédiaire d'articulations en film (36a, 36b), deux bras d'écartement (35a, 35b) présentant en particulier une forme incurvée, pouvant être pressés l'un contre l'autre, dans lequel les articulations (36a, 36b) sont réalisées de manière élastique de telle manière qu'elles écartent les bras d'écartement (35a, 35b) de manière à les éloigner au maximum l'un de l'autre lorsqu'aucune pression n'est exercée sur lesdits bras d'écartement.

16. Elément de recouvrement (1) selon la revendication 15,
**caractérisé en ce que** l'un des bras d'écartement (35a) présente une extrémité libre, tandis que l'autre bras d'écartement (35b) est articulé au niveau d'une entretoise d'assemblage (310) de la pièce d'assemblage (14a) par l'intermédiaire d'une autre articulation de film (37), dans lequel l'autre articulation (37) est réalisée de manière élastique de telle manière qu'elle éloigne par écartement le bras d'écartement (35b) au maximum de l'entretoise d'assemblage (310) lorsqu'il n'est pas soumis à l'action d'une pression.

17. Unité modulaire constituée d'une élément de recouvrement (1) selon l'une quelconque des revendications 1 à 16 et d'une partie d'assemblage (14a, 14b), en particulier d'une partie de serrage, dans lequel la partie d'assemblage (14a, 14b) est reliée par complémentarité de forme, à force et/ou par liaison de matière aux éléments de fixation (13) correspondants de l'élément de recouvrement (1) par l'intermédiaire d'éléments d'assemblage (15a, 15b) et dans lequel elle présente des éléments d'assemblage (16a, 16b), tels que des cames de serrage (16a) ou des ressorts (16b), aux fins de l'assemblage à force et par complémentarité de forme à la partie de socle (20a) d'un dispositif d'installation (20) électrique.

18. Unité modulaire selon la revendication 17,
**caractérisée par** une partie d'assemblage (14a, 14b) présentant les caractéristiques de la partie caractérisante de l'une quelconque des revendications 9, 10 ou 13 à 16.

19. Dispositif d'installation (20) électrique, destiné en particulier à être monté de manière encastrée, qui présente dans une partie de socle (20a) un commutateur à touche, qui permet de déclencher un processus de commutation par l'intermédiaire d'un élément d'actionnement (3, 3a, 3b) qui parcourt une course d'actionnement depuis une position de repos jusqu'à une position de commutation sous l'action d'une pression d'actionnement (p) exercée sur le côté supérieur (4, 4a, 4b) dudit élément d'actionnement, et qui comprend un élément de recouvrement (1) doté d'un corps de cadre (2) présentant une surface de recouvrement (5), lequel corps de cadre entoure au niveau de la bordure l'élément d'actionnement (3, 3a, 3b), dans lequel le corps de cadre (2) est relié au niveau d'un côté à l'élément d'actionnement (3, 3a, 3b) par l'intermédiaire d'une articulation (6, 6a, 6b),
**caractérisé en ce que** l'élément d'actionnement (3, 3a, 3b) et le corps de cadre (2) sont réalisés d'un seul tenant.

20. Dispositif d'installation (20) électrique selon la revendication 19, comprenant un élément de recouvrement (1) selon l'une quelconque des revendications 1 à 16 et/ou comprenant une unité modulaire selon la revendication 17 ou 18.
